(19) Europäisches Patentamt
European Patent Office
Office européen des brevets

(11) **EP 2 624 575 A1**

(12) **EUROPEAN PATENT APPLICATION**
published in accordance with Art. 153(4) EPC

(43) Date of publication:
**07.08.2013 Bulletin 2013/32**

(51) Int Cl.:
**H04N 17/00** (2006.01)  **G01B 11/00** (2006.01)
**G03B 35/08** (2006.01)  **H04N 5/232** (2006.01)
**H04N 13/02** (2006.01)

(21) Application number: **11828606.1**

(22) Date of filing: **27.07.2011**

(86) International application number:
**PCT/JP2011/067118**

(87) International publication number:
**WO 2012/043045 (05.04.2012 Gazette 2012/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.09.2010 JP 2010220250**

(71) Applicant: **Hitachi Automotive Systems, Ltd.**
**Hitachinaka-shi**
**Ibaraki 312-8503 (JP)**

(72) Inventors:
• **HIGUCHI, Mirai**
**Hitachi-shi,**
**Ibaraki 319-1292 (JP)**

• **SAKANO, Morihiko**
**Hitachi-shi,**
**Ibaraki 319-1292 (JP)**
• **SHIMA, Takeshi**
**Hitachi-shi,**
**Ibaraki 319-1292 (JP)**
• **MURAMATSU, Shoji**
**Hitachi-shi,**
**Ibaraki 319-1292 (JP)**
• **MONJI, Tatsuhiko**
**Hitachinaka-shi,**
**Ibaraki 312-8503 (JP)**

(74) Representative: **MERH-IP**
**Matias Erny Reichl Hoffmann**
**Paul-Heyse-Strasse 29**
**80336 München (DE)**

(54) **IMAGE PROCESSING DEVICE AND IMAGE CAPTURING DEVICE USING SAME**

(57) It is possible to provide an image processing apparatus capable of carrying out calibration easily and precisely without requiring a special facility and provide an imaging apparatus making use of the image processing apparatus. The imaging apparatus comprises at least two cameras 4a and 4b. The image processing apparatus or the image processing apparatus comprises a corresponding-area computing section 23 for finding a relation between areas on images taken by the cameras 4a and 4b; a coincidence-degree computing section 24 for finding a degree of coincidence of information obtained from corresponding areas on the images taken by the cameras 4a and 4b; and a camera-parameter computing section 25 for finding camera parameters on the basis of the coincidence degree computed by the coincidence-degree computing section 24.

FIG.1

**Description**

Using the Same

Technical Field

The present invention relates to an image processing apparatus for carrying out calibration of an imaging apparatus and relates to the imaging apparatus making use of the image processing apparatus.

Background Art

In recent years, a obstacle detecting apparatus for detecting obstacles such as a pedestrian, a vehicle by using cameras is put to practical use. A stereo camera is an apparatus for computing the disparity of the same object on a plurality of images, which are taken at the same time, by adoption of a template matching technique and for computing the position of the object in a real space by adoption of a known conversion formula on the basis of the computed disparity.

The stereo camera computes the distance of a object by making use of a pair of images taken by utilizing two imaging apparatus. A stereo-camera apparatus for recognizing a object can be applied to a system such as a monitoring system for detecting an intrusion of a suspicious individual and detecting an abnormality or a vehicle onboard system for assisting the safe driving of a vehicle.

The stereo camera used in such a monitoring system and such a vehicle onboard system finds the distance by adoption of a triangulation technology for a pair of images taken at positions separated away from each other by a gap. In general, the stereo camera comprises at least two imaging apparatus and a stereo-image processing LSI (Large Scale Integration) for carrying out triangulation processing on at least two taken images output by these imaging apparatus. In order to implement the triangulation processing, the stereo-image processing LSI carries out processing to find the magnitude of a shift (disparity) of coincident positions on a pair of image regions by superposing pixel information included in the two images. Thus, ideally, there is no shift other than the disparity between the two images. For each of the imaging apparatus, it is necessary to carry out adjustment in order to eliminate a shift of the optical characteristic and a shift of the signal characteristic or find a relation between the positions of the camera in advance.

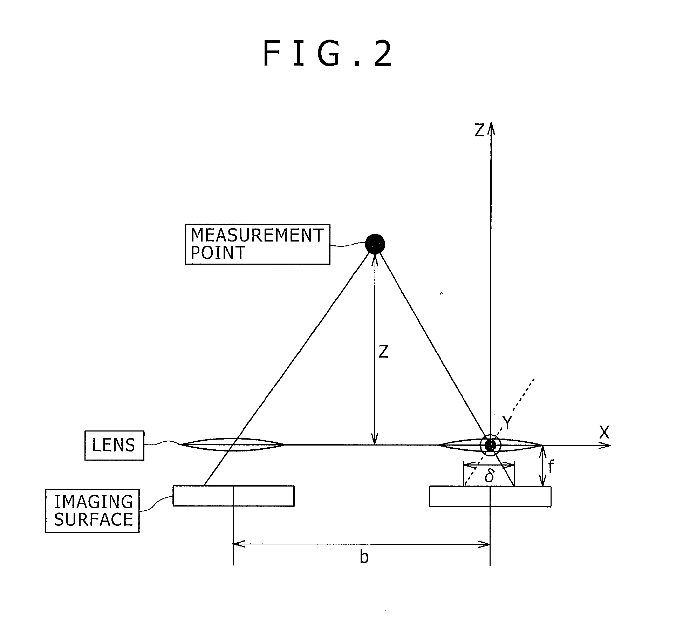

Fig. 2 is a diagram referred to in the following explanation of processing carried out by a stereo camera apparatus. In Fig. 2, notation $\delta$ denotes a disparity, notation Z denotes a measurement distance, notation f denotes a focal length whereas notation b denotes a baseline length between the imaging apparatuses. These elements satisfy Eq. (1) given as follows:

[Equation 1]

$$Z = b \cdot f / \delta \qquad \dots \ (1)$$

The shorter the disparity $\delta$, the longer the measurement distance Z found by making use of Eq. (1). If the performance to compute the disparity $\delta$ deteriorates, the precision of the measurement distance Z also deteriorates as well. Thus, in order to find the disparity $\delta$ with a high degree of accuracy, it is important to carry out calibration to find parameters of each camera and parameters representing relations between the positions of the cameras.

As a method for carrying out calibration of an imaging apparatus, for example, a method disclosed in Non-Patent Document 1 has been proposed. In accordance with this method, typically, a pattern defined in advance is drawn on a planar surface and images of the pattern on the planar surface are taken a plurality of times by making use of a camera from different angles. An example of the pattern is a lattice pattern. Then, typically, pre-defined lattice points of the lattice pattern are detected from the planar-surface pattern on the taken images to be used as characteristic points. Finally, calibration is carried out by making use of the already known characteristic points. The method disclosed in Non-Patent Document 1 can be adopted to find internal parameters of the camera. The internal parameters of the camera include the pixel size of the imaging device, the center of the image and the focal length.

In addition, as a method for finding the parameters representing relations between the positions of cameras, a method disclosed in Patent Document 1 has been proposed. The parameters representing relations between the positions of cameras are referred to hereafter as external parameters. In accordance with this method, a traffic light or the like is detected by carrying out image processing and a disparity at the instant is found. Then, after moving for a while, the traffic light detected earlier is again detected and a disparity is found. Finally, an angle shift of the camera is found from the two disparities and the movement distance.

Prior Art Document

Patent Document

Patent Document 1: JP-10-341458-A

Non-Patent Document

Non-Patent Document 1: Z. Zhang et al., "A Flexible New Technique for Camera Calibration," IEEE Transactions on Pattern Analysis and Machine Intelligence, Vol. 22, No. 11, pp. 1330-1334, Nov 2000.

Summary of the Invention

Problems to be Solved by the Invention

In accordance with the method disclosed in non-Patent Document 1, however, the images of a predefined pattern drawn on a planar surface to serve as a planar-surface pattern need to be taken a plurality of times by making use of a camera from different angles. Thus, special facilities are required. The special facilities include facilities for moving a planar-surface pattern and facilities for providing a plurality of planar surfaces.

In addition, the external parameter that can be found in accordance with the method disclosed in Patent Document 1 is only an angle shift parallel to the baseline length of the camera. On top of that, there is raised a problem that, even though a movement distance is required besides disparities found at different instants as disparities of the same object, due to movement-distance errors and the like, it is difficult to find the angle shift with a high degree of precision.

It is thus an object of the present invention to provide an image processing apparatus capable of carrying out calibration of an imaging apparatus easily and precisely without requiring a simple facility or a special facility and provide the imaging apparatus making use of the image processing apparatus.

Means for Solving the Problems

In order to solve the problems described above, the present invention provides an image processing apparatus and an imaging apparatus making use of the image processing apparatus. The image processing apparatus and the imaging apparatus comprise main sections such as:

a correction-data reading section for reading pre-stored correction data to be used for correcting two images taken in such a way that the visual fields overlap each other and at least one of the positions, the angles and the zoom ratios are different from each other or for reading correction data computed by carrying out processing;
an image correcting section for correcting a taken image by making use of the correction data read by the, correction-data reading section;
a corresponding-area computing section for computing corresponding areas selected from the inside of each of two images corrected by the image correcting section;
a coincidence-degree computing section for computing at least one of a degree of coincidence of image patterns extracted from the corresponding areas, a degree of coincidence of coordinates of the corresponding areas and a degree of coincidence of gaps between the corresponding areas;
a camera-parameter computing section for computing camera parameters on the basis of the coincidence degrees computed by the coincidence-degree computing section; and
a correction-data storing section used for storing the camera parameters computed by the camera-parameter computing section or correction data based on the camera parameters.

Effects of the Invention

It is possible to provide an image processing apparatus capable of carrying out calibration of an imaging apparatus easily and precisely without requiring a simple facility or a special facility and provide the imaging apparatus making use of the image processing apparatus.

Brief Description of the Drawings

Fig. 1 is a block diagram to be referred to in explanation of a first embodiment implementing a method for calibrating an imaging apparatus according to the present invention;

Fig. 2 is a diagram to be referred to in explanation of the principle of a stereo camera;

Fig. 3 is a diagram to be referred to in explanation of an outline of rectification processing of a stereo camera;

Fig. 4 is a diagram showing a typical configuration of a camera unit adopting a calibration method according to the present invention;

Fig. 5 is a diagram showing a typical configuration of a vehicle onboard system adopting a calibration method according to the present invention;

Fig. 6 is a diagram showing a typical result of processing carried out by a corresponding-area computing section according to the present invention to find corresponding areas between images;

Fig. 7 is diagrams showing a typical result of processing carried out by a corresponding-area computing section according to the present invention to adjust the position of a corresponding area on an image;

Fig. 8 is a diagram showing a typical process of making taken images parallel to each other in processing carried out by a camera-parameter computing section according to the present invention to find camera parameters;

Fig. 9 is a diagram showing a processing flow according to the first embodiment implementing a method for calibrating an imaging apparatus provided by the present invention;

Fig. 10 is a block diagram to be referred to in explanation of a second embodiment implementing a method for calibrating an imaging apparatus according to the present invention;

Fig. 11 is explanatory diagrams showing results output by a corresponding-area computing section and a coincidence-degree computing section which are provided by the present invention;

Fig. 12 is a diagram to be referred to in explanation of a process carried out by the coincidence-degree computing section according to the present invention to find a degree of coincidence by making use of widths found from a pair of corresponding areas and a width for a case in which parameters are not shifted;

Fig. 13 is a diagram showing a processing flow according to a second embodiment implementing a method for calibrating an imaging apparatus provided by the present invention;

Fig. 14 is a diagram showing typical processing making use of a plurality of images taken with different timings in a calibration method provided by the present invention;

Fig. 15 is a diagram showing another typical processing making use of a plurality of images taken with different timings in a calibration method provided by the present invention;

Fig. 16 is a diagram to be referred to in explanation of execution of calibration processing by dividing the processing in a calibration method provided by the present invention;

Fig. 17 is a diagram showing the flow of processing assigning the highest priority to calibration processing carried out in accordance with the second embodiment implementing a method for calibrating an imaging apparatus provided by the present invention; and

Fig. 18 is a diagram to be referred to in explanation of typical processing carried out to compute corresponding areas by making use of characteristic points in accordance with the second embodiment implementing a method for calibrating an imaging apparatus provided by the present invention.

Mode for Carrying Out the Invention

Embodiments of the present invention are explained by referring to the diagrams as follows.

First Embodiment

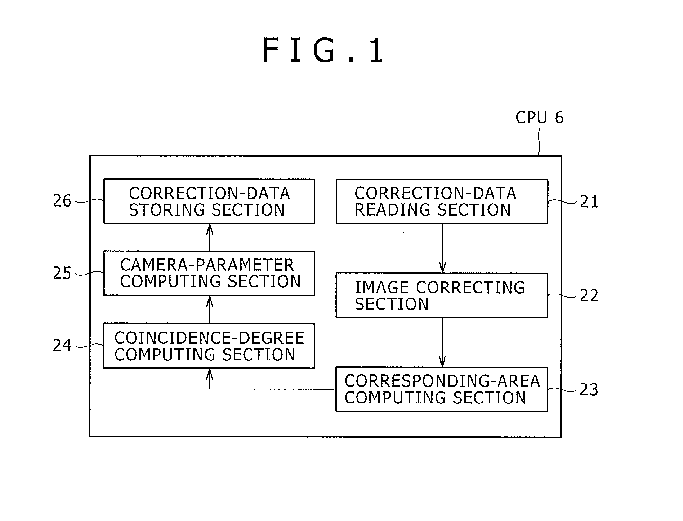

Fig. 1 is a block diagram showing a typical basic configuration of an image processing apparatus adopting a method for calibrating a camera, which serves as an imaging apparatus, in accordance with a first embodiment of the present invention. Details will be described later.

The first embodiment described below implements a method for inferring camera parameters such as external parameters, internal parameters and distortion parameters.

In this embodiment, however, a horizontal-direction scale factor and a vertical-direction scale factor which are included in the internal parameters are adjusted by adjusting a left camera with a right camera taken as a reference, adjusted by adjusting the right camera with the left camera taken as a reference or adjusted by adjusting both the left and right cameras in such a way that the scale factors of the left image become equal to the scale factors of the right image. If a object with a known size and a known distance can be photographed, the horizontal-direction scale factor and the vertical-direction scale factor can be found from the size of the object in the real space, the distance to the object in the real space and the size of the object in the taken image of the object.

That is to say, with the optical axis direction taken as the direction of the Z axis, the horizontal direction taken as the direction of the X axis and the vertical direction taken as the direction of the Y axis as shown in Fig. 2 in a typical configuration wherein the lens center of the right camera is placed in a vehicle, the external parameters, the internal parameters and the distortion parameters are found and, then, the horizontal-direction scale factor and the vertical-direction scale factor which are included in the internal parameters are found in such a way that the horizontal-direction and vertical-direction scale factors of the left image become equal to those of the right image. If these parameters can be found, by carrying out rectification processing to be explained later, the planar surface of the image can be converted so that epipolar lines become the same straight line.

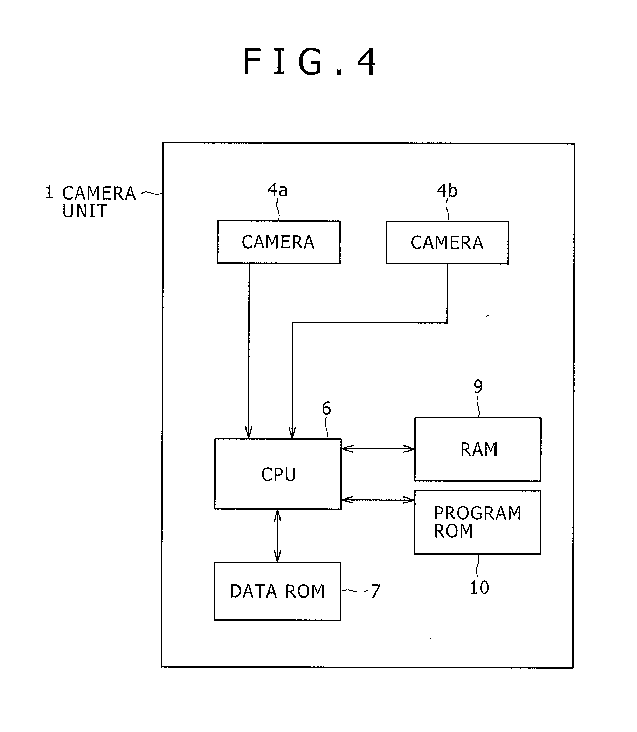

A method for calibrating an imaging apparatus in accordance with the present invention is applied to a camera unit 1 serving as the imaging apparatus like one shown in Fig. 4. Cameras 4a and 4b each provided in the camera unit 1 to serve as an imaging device implement a function to recognize a surrounding environment. In actuality, the camera unit 1 may comprise three or more cameras. As an alternative, the camera unit 1 has only one camera. In the case of this alternative configuration, by moving, panning, tilting and zooming the camera, the camera can be used to take a plurality of images under different conditions and with different timings and, then, the images can be used to implement the function to recognize a surrounding environment. In addition, it is also possible to provide a configuration in which a processing unit other than the camera unit 1 having the cameras 4a and 4b inputs images taken by the cameras 4a and 4b and processes the input images. An example of such a processing unit is a computer not shown in the figure.

The camera unit 1 comprises: the cameras 4a and 4b serving as imaging devices set in such a way that the visual fields overlap each other; a CPU 6 serving as processing means for processing images taken by the cameras 4a and 4b; a RAM 9 serving as storage means for the CPU 6; a ROM 10 serving as program storing means; and a ROM 7 serving as data storing means.

However, the configuration described above is not an absolutely required condition. That is to say, it is possible to provide a configuration further including a special image processing LSI for processing a part of processing in addition to the CPU 6. It is also possible to provide a configuration further including a plurality of RAMs for the image processing LSI instead of one RAM. In addition, the camera unit 1 is configured to serve as a stereo camera capable of measuring a distance by making use of images taken by the cameras 4a and 4b.

For example, the camera unit 1 is installed in such a way that the cameras are provided on the left and right sides of the room mirror inside a vehicle. In the following description, the camera provided on the left side of the room mirror is referred to as a left camera whereas the camera provided on the right side of the room mirror is referred to as a right camera. However, the number of cameras does not have to be two and the cameras are arranged not necessarily in the horizontal direction. That is to say, calibration can be carried out in accordance with the present invention as long as the visual fields overlap each other. In addition, instead of providing the cameras at positions separated away from each other in the horizontal direction, the cameras can also be provided at positions separated away from each other in the vertical direction. As an alternative, one camera is employed for taking a plurality of images, which are subjected to the image processing, with timings different from each other while the vehicle is moving.

Before the first embodiment is explained in concrete terms, the following description explains a variety of parameters found in calibration.

In general, a taken image and a lens can be treated in a pin-hole camera model if it is assumed that lens distortions are not included. First of all, the following description explains a case in which a lens distortion is not included. Then, the following description explains a case in which a lens distortion is included. In addition, with progress made in recent years in the field of manufacturing technologies, the angle formed by the two coordinate axes of the imaging device is now regarded as a right angle. Thus, the following description is presented by assuming that the angle formed by the two coordinate axes of the imaging device is a right angle. However, the description may also adopt a treatment having a form including the angle formed by the two coordinate axes of the imaging device.

Let a point in the camera coordinate system be represented by coordinates (X, Y, Z) whereas a point in the image coordinate system be represented by coordinates (u, v). In this case, the pin-hole camera model is represented by Eq. (2) given as follows.

[Equation 2]

$$
\begin{cases}
u = \alpha_u \dfrac{X}{Z} + u_0 \\[2mm]
v = \alpha_v \dfrac{Y}{Z} + v_0
\end{cases}
$$

$$\dots \ (2)$$

In the equation given above, notation $\alpha_u$ denotes the horizontal-direction scale factor of the camera, notation $\alpha_v$ denotes the vertical-direction scale factor of the camera whereas notations $u_0$ and $v_0$ denote the coordinates of the image center of the camera. However, the horizontal-direction scale factor $\alpha_u$ and the vertical-direction scale factor $\alpha_v$ are obtained from the focal length and the pixel size. Expressing Eq. (2) in a matrix format making use of the same-order coordinates yields Eq. (3) as follows.

[Equation 3]

$$s\begin{bmatrix} u \\ v \\ 1 \end{bmatrix} = \begin{bmatrix} \alpha_u & 0 & u_0 \\ 0 & \alpha_v & v_0 \\ 0 & 0 & 1 \end{bmatrix}\begin{bmatrix} X \\ Y \\ Z \end{bmatrix} = A\begin{bmatrix} X \\ Y \\ Z \end{bmatrix} \quad \dots (3)$$

In the equation given above, notation s denotes a scalar. In addition, internal parameters A can be expressed by Eq. (4) given below as a matrix expression taking an angle $\theta$ into consideration. The angle $\theta$ is the angle formed by the two coordinate axes of the imaging device.

[Equation 4]

$$A = \begin{bmatrix} \alpha_u & -\alpha_u\cot\theta & u_0 \\ 0 & \alpha_v/\sin\theta & v_0 \\ 0 & 0 & 1 \end{bmatrix} = \begin{bmatrix} \alpha & c & u_0 \\ 0 & \beta & v_0 \\ 0 & 0 & 1 \end{bmatrix} \quad \dots (4)$$

In the following description, the aforementioned parameters such as the scale factors and the image center are referred to as internal parameters serving.

In addition, when incident light coming through the lens impinges the imaging device to put in an exposure state, a distortion is generated on the taken image. Such distortions can be classified into three large categories. The first category is a group of lens distortions generated by incident light arriving at an inner side more inner in such a way that, the longer the distance between the image center and the incident light, the more inner the inner side than the pinhole camera model. The second category is a group of lens distortions generated by shifts of lens centers in a configuration including a plurality of lenses. The third category is a group of lens distortions caused by an angle shift generated due to the fact that the optical axis intersects the imaging surface not at a right angle. As described above, lens distortions are generated by a plurality of conceivable causes.

If a distortion model taking lens distortions and the like into consideration is adopted for example, the distortion model can be expressed by Eqs. (5) and (6) given below. However, the distortion model is not an absolutely required condition. That is to say, a different model can be adopted.

[Equation 5]

$$x'' = x'\left(1 + k_1 r^2 + k_2 r^4\right) + 2p_1 x'y' + p_2\left(r^2 + 2x'^2\right) \quad \dots (5)$$

[Equation 6]

$$y'' = y'\left(1 + k_1 r^2 + k_2 r^4\right) + p_1\left(r^2 + 2y'^2\right) + 2p_2 x'y' \quad \dots (6)$$

In the equations given above, notations x' and y' denote the coordinates of a position in a normalized coordinate system established by setting the focal length f used in Eqs. (7) and (8) at 1. The coordinates x' and y' are position coordinates after distortion corrections. On the other hand, notations x" and y" denote the coordinates of a position in the normalized coordinate system. The coordinates x" and y" are position coordinates before the distortion corrections.

[Equation 7]

$$x' = X/Z \quad (\text{where}, \quad r = \sqrt{x'^2 + y'^2}) \qquad \dots (7)$$

[Equation 8]

$$y' = Y/Z \quad (\text{where}, \quad r = \sqrt{x'^2 + y'^2}) \qquad \dots (8)$$

Thus, the pixel-position coordinates (u', v') finally obtained before distortion corrections in the image coordinate system can be found from the scale factors of the image and the center of the image in accordance with Eqs. (9) and (10) given as follows.

[Equation 9]

$$u' = \alpha_u x'' + u_0 \qquad \dots (9)$$

[Equation 10]

$$v' = \alpha_u x'' + v_0 \qquad \dots (10)$$

That is to say, in the calibration, parameters $k_1$, $k_2$, $p_1$ and $p_2$ can be found in order to correct distortions. In the following description, these parameters are referred to as distortion parameters.

Next, external parameters are explained. The external parameters are parameters representing a relation between two 3-dimensional coordinate systems. The parameters are expressed as a rotation matrix having a freedom degree of 3 representing a rotation component and a parallel movement vector also having a freedom degree of 3. In calibration of a stereo camera, external parameters representing a relation between the camera coordinate systems of the left and right cameras are found. This relation is expressed by Eq. (11) in which notation $(X^R, Y^R, Z^R)$ denotes the coordinates of a point in the coordinate system of the right camera, notation $(X^L, Y^L, Z^L)$ denotes the coordinates of a point in the coordinate system of the left camera, notation R denotes the rotation matrix and notation t denotes the parallel movement vector.

[Equation 11]

$$\begin{bmatrix} X^R \\ Y^R \\ Z^R \end{bmatrix} = R \begin{bmatrix} X^L \\ Y^L \\ Z^L \end{bmatrix} + t \qquad \dots (11)$$

In this case, any rotation can be represented by three stages such as the first stage of a rotation $\varphi_z$ around the Z axis, the next stage of a new rotation $\varphi_y$ around the Y axis and the last stage of a new rotation $\varphi_x$ around the X axis. The rotation matrix R is represented by Eq. (12) given below. In addition, the symbol of the rotation may represent a rotation axis and a rotation quantity by making use of an Euler angle or a rotation vector.

[Equation 12]

$$R = \begin{bmatrix} r_{11} & r_{12} & r_{13} \\ r_{21} & r_{22} & r_{23} \\ r_{31} & r_{32} & r_{33} \end{bmatrix} = \mathrm{Rot}(\phi_z)\mathrm{Rot}(\phi_y)\mathrm{Rot}(\phi_x)$$

$$= \begin{bmatrix} \cos\phi_z & -\sin\phi_z & 0 \\ \sin\phi_z & \cos\phi_z & 0 \\ 0 & 0 & 1 \end{bmatrix} \begin{bmatrix} \cos\phi_y & 0 & \sin\phi_y \\ 0 & 1 & 0 \\ -\sin\phi_y & 0 & \cos\phi_y \end{bmatrix} \begin{bmatrix} 1 & 0 & 0 \\ 0 & \cos\phi_x & -\sin\phi_x \\ 0 & \sin\phi_x & \cos\phi_x \end{bmatrix}$$

$$\ldots \quad (12)$$

In addition, the parallel movement vector t is expressed by Eq. (13) as follows.

[Equation 13]

$$t = \begin{bmatrix} t_x & t_y & t_z \end{bmatrix} \qquad \ldots \quad (13)$$

In the calibration, all or some of the internal, distortion and external parameters described above are found.

Next, the following description explains a method for finding a disparity by making use of the external parameters described above.

When a 3-dimensional measurement is carried out by making use of a stereo image, it is important to search for corresponding points on the left and right images. A concept of importance to the search for the corresponding points is the epipolar geometry. Let the geometrical relation between the two cameras be known. In this case, if a point on a specific one of the images is given, an epipolar planar surface and epipolar lines on the images are determined. Even if the original coordinates in the 3-dimensional space are not known, on the other one of the images, the position of the corresponding point is limited to positions on the epipolar line. Thus, the search for the corresponding point is not a 2-dimensional search, but a 1-dimensional search along the epipolar line.

Elements $r_{11}$ to $r_{33}$ of the rotation matrix R and elements of the parallel movement vector t are used to yield Eqs. (14) to (17) given as follows.

[Equation 14]

$$\tilde{u}^R = X/Z$$

(Notation $\left(\tilde{u}^R, \tilde{v}^R\right)$ denotes coordinates obtained after distortion correction as the coordinates of a point on the right image in an image coordinate system) $\quad \ldots \quad (14)$

[Equation 15]

$$\tilde{v}^R = Y/Z$$

(Notation $\left(\tilde{u}^R, \tilde{v}^R\right)$ denotes coordinates obtained after the distortion correction as the coordinates of a point on the right image in an image coordinate system) ... (15)

[Equation 16]

$$\tilde{u}^L = \frac{r_{11}X + r_{12}Y + r_{13}Z + t_X}{r_{31}X + r_{32}Y + r_{33}Z + t_Z}$$

(Notation $\left(\tilde{u}^L, \tilde{v}^L\right)$ denotes coordinates obtained after the distortion correction as the coordinates of a point on the left image in an image coordinate system) ... (16)

[Equation 17]

$$\tilde{v}^L = \frac{r_{21}X + r_{22}Y + r_{23}Z + t_Y}{r_{31}X + r_{32}Y + r_{33}Z + t_Z}$$

(Notation $\left(\tilde{u}^L, \tilde{v}^L\right)$ denotes coordinates obtained after the distortion correction as the coordinates of a point on the left image in an image coordinate system) ... (17)

Then, Eqs. (13) and (14) are substituted into Eqs. (15) and (16) to eliminate Z. As a result, Eq. (18) is obtained.
[Equation 18]

$$\tilde{u}^L \left\{ \left(r_{31}\tilde{u}^R + r_{32}\tilde{v}^R + r_{33}\right)t_Y - \left(r_{21}\tilde{u}^R + r_{22}\tilde{v}^R + r_{23}\right)t_Z \right\}$$
$$+ \tilde{v}^L \left\{ \left(r_{11}\tilde{u}^R + r_{12}\tilde{v}^R + r_{13}\right)t_Z - \left(r_{31}\tilde{u}^R + r_{32}\tilde{v}^R + r_{33}\right)t_X \right\}$$
$$+ \left(r_{21}\tilde{u}^R + r_{22}\tilde{v}^R + r_{23}\right)t_X - \left(r_{11}\tilde{u}^R + r_{12}\tilde{v}^R + r_{13}\right)t_Y = 0$$

... (18)

Coefficients a, b and c of equations for the epipolar line are expressed by Eq. (19) given below. Thus, the epipolar line can be found. In addition, in the same way, it is possible to find the epipolar line given on the right image to serve as a line for the point which exists on the left image as a point after the distortion correction.
[Equation 19]

For $a\widetilde{u}^R + b\widetilde{v}^R + c = 0$, the equations of the epipolar line are given as follows:

$$\begin{cases} a = \left(r_{31}\widetilde{u}^R + r_{32}\widetilde{v}^R + r_{33}\right)t_Y - \left(r_{21}\widetilde{u}^R + r_{22}\widetilde{v}^R + r_{23}\right)t_Z \\ b = \left(r_{11}\widetilde{u}^R + r_{12}\widetilde{v}^R + r_{13}\right)t_Z - \left(r_{31}\widetilde{u}^R + r_{32}\widetilde{v}^R + r_{33}\right)t_X \\ c = \left(r_{21}\widetilde{u}^R + r_{22}\widetilde{v}^R + r_{23}\right)t_X - \left(r_{11}\widetilde{u}^R + r_{12}\widetilde{v}^R + r_{13}\right)t_Y \end{cases} \qquad \ldots (19)$$

The above description explains a case in which an epipolar line is computed and the epipolar line is searched for a corresponding point. In addition to the method for searching an epipolar line for a corresponding point, it is possible to adopt a rectification technique which is a method for making the left and right images parallel to each other. In an image coordinate system obtained after the rectification, the corresponding points inside the left and right images exist on the same horizontal line. Thus, the search for the corresponding point can be carried out along the horizontal line axis of the image. In a built-in system, the rectification technique is adopted in many cases because the rectification technique does not raise any computation-cost problem in particular.

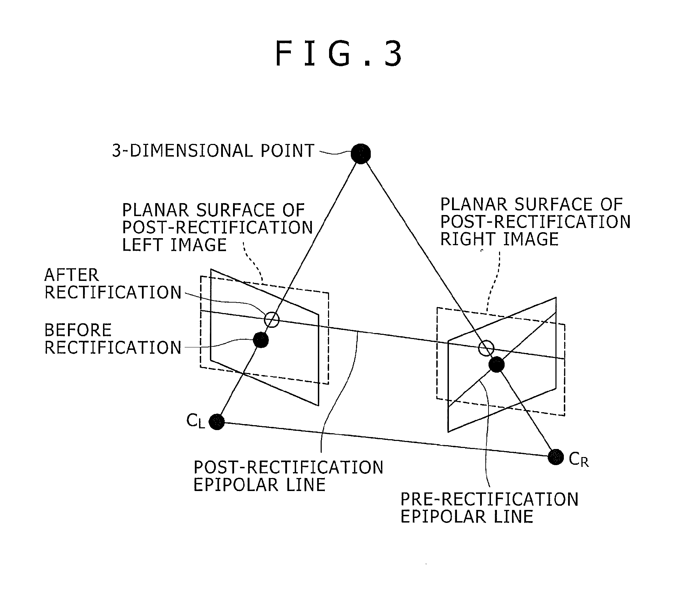

Fig. 3 is a diagram to be referred to in explanation of an outline of rectification processing. In this rectification processing, the origin CR of the right-camera coordinate system and the origin CL of the left-camera coordinate system are not moved. Instead, the right-camera coordinate system and the left-camera coordinate system are rotated in order to produce new parallel image surfaces. The magnitude of a parallel movement vector from the origin CR to the origin CL is expressed by Eq. (20) given as follows.

[Equation 20]

$$\|t\| = \sqrt{t_X^2 + t_Y^2 + t_Z^2} \qquad \ldots (20)$$

In this case, three direction vectors $e_1$, $e_2$ and $e_3$ are defined as expressed by Eqs. (21), (22) and (23) respectively and the three direction vectors $e_1$, $e_2$ and $e_3$ are taken as direction vectors for the post-rectification X, Y and Z axes in order to make the images parallel to each other. Thus, on the surfaces of the new left and right images, the epipolar lines appear as the same straight line. That is to say, the rotation matrix for rotating the right image and the rotation matrix for rotating the left image are used for conversion so that the X, Y and Z axes after the rectification match the direction vectors $e_1$, $e_2$ and $e_3$.

[Equation 21]

$$e_1 = \frac{t}{\|t\|} \qquad \ldots (21)$$

[Equation 22]

$$e_2 = \frac{\begin{bmatrix} -t_Y & t_X & 0 \end{bmatrix}}{\sqrt{t_X^2 + t_Y^2}} \qquad \ldots (22)$$

[Equation 23]

$$e_3 = e_1 \times e_2$$

$$\ldots\ (23)$$

In a built-in system, in general, an approach for the rectification is adopted for in order to carry out processing on a real-time basis. As an example, the following description explains a case in which image correction is implemented to make the images parallel to each other by rectification.

Next, the following description explains the internal, external and distortion parameters mentioned earlier. In the following description, the aforementioned parameters are referred to as camera parameters. In addition, it is not necessary to find all the internal, external and distortion parameters. That is to say, some of these parameters may be fixed constants. As an alternative, it is possible to provide a configuration for estimating parameters such as parameters convertible into these aforementioned parameters and parameters of a mathematical expression used for approximating a camera model making use of these aforementioned parameters. In addition, instead of finding the internal, external and distortion parameters, it is also possible to find elements which can be used for computing pixel positions before and after the correction. Examples of such elements are the elements of a projection transformation matrix, elements of a fundamental matrix and elements of the affine transformation.

It is to be noted that the camera parameters can be summarized into the following definitions.

· The internal parameters include the focal length of the imaging device, the vertical-direction size of the pixel, the horizontal-direction size of the pixel, the vertical-direction scale factor, the horizontal-direction scale factor, the angle formed by the longitudinal and lateral axes of the imaging device, the coordinates of the optical axis center, etc.
· The external parameters include the rotation angle between imaging devices, the parallel moving amount between the imaging devices, etc.
· The distortion parameters include parameters used for correcting distortions of the image, etc.

The program ROM 10 employed in the camera unit 1 serving as an imaging apparatus is used for storing calibration programs provided for this embodiment. When the power supply is turned on, the CPU 6 executes these programs in order to implement a calibration function. That is to say, the CPU 6 functions as the image processing apparatus comprising the correction-data reading section 21, the image correcting section 22, the corresponding-area computing section 23, the coincidence-degree computing section 24, the camera-parameter computing section 25 and the correction-data storing section 26 as shown in a functional block diagram of Fig. 1.

The correction-data reading section 21 has a function to read camera parameters and correction data included in a transformation table or the like from storage means such as the data ROM 7 and the RAM 9 in order to correct images taken by making use of the cameras 4a and 4b serving as two imaging devices. The transformation table is a table showing data representing a relation between the pre-transformation pixel position and the post-transformation pixel position which are found from the camera parameters. As an alternative, it is also possible to make use of parameters and a transformation table for correcting an image found from the parameters which are computed by the CPU 6 on the basis of data used in the programs. The data includes variables, constants and random numbers.

The image correcting section 22 has a function to correct a taken image by making use of the correction data read by the correction-data reading section 21. The image is corrected by carrying out processing such as distortion correction and the rectification. It is to be noted that, by making use of correction data for a specific one of the two cameras 4a and 4b, the image correcting section 22 may correct an image taken by the other one of the two cameras 4a and 4b.

The corresponding-area computing section 23 has a function to find corresponding areas on images taken by the cameras 4a and 4b and corrected by the image correcting section 22. It is to be noted that a plurality of such corresponding areas may be provided. In addition, if calibration is carried out by taking an image of a known pattern, it is possible to pre-define which area corresponds to an area. Thus, it is possible to define a corresponding area in a program or the like in advance. In addition, a characteristic point of a known pattern is detected from each image and, by collating the characteristic points with each other, corresponding areas can be found. As an alternative, it is also obviously possible to provide a configuration in which the CPU 6 is connected to an external apparatus such as a PC not shown in the figure and the CPU 6 is capable of acquiring a corresponding area from the external apparatus.

The coincidence-degree computing section 24 has a function to find a coincidence degree representing the degree of coincidence of image portions in left and right corresponding areas on images taken by the cameras 4a and 4b and corrected by the image correcting section 22. To put it concretely, the coincidence-degree computing section 24 computes at least one of coincidence degrees which include the degree of coincidence of image patterns extracted from the left and right corresponding areas, the degree of coincidence of the coordinates of the left and right corresponding areas and the degree of coincidence of gaps between the corresponding areas. It is to be noted that, in order to compute the degree of coincidence of image patterns, it is possible to make use of characteristic quantities capable of changing the image patterns. The characteristic quantities include luminance values of pixels, brightness gradients, brightness gradient directions, color information, color gradients, color gradient directions, a histogram of the luminance, a histogram of the brightness gradient, a histogram of the color gradient, a histogram of the brightness gradient direction and a histogram of the color gradient direction. The degree of coincidence of gaps between the corresponding areas is computed by comparing at least one of computed values with each other, the widths of parallel patterns stored or defined in advance with each other and the widths of parallel patterns received from a map database or an external apparatus with each other. In this case, the computed values are computed from at least one of quantities which can be computed from the gaps between a plurality of aforementioned corresponding areas. The quantities include the average value of the gaps between the corresponding areas, the minimum value of the gaps between the corresponding areas and the maximum value of the gaps between the corresponding areas.

The camera-parameter computing section 25 has a function to compute camera parameters on the basis of the coincidence degree found by the coincidence-degree computing section 24. To put it concretely, the camera-parameter computing section 25 finds such camera parameters that the computed degree of coincidence increases (or the computed degree of coincidence decreases). An indicator of typically an evaluation function used for the degree of coincidence indicates whether the camera-parameter computing section 25 is to find such camera parameters that the computed degree of coincidence increases or the camera-parameter computing section 25 is to find such camera parameters that the computed degree of coincidence decreases.

The correction-data storing section 26 has a function to temporarily save or store the camera parameters computed by the camera-parameter computing section 25 or a transformation table in storage means such as the RAM 9 and the data ROM 7. As explained earlier, the camera parameters are the external parameters, the internal parameters and the distortion parameters. Also as described before, the transformation table is a table showing data representing a relation between the pre-transformation pixel position and the post-transformation pixel position which are found on the basis of the camera parameters. As an alternative, the correction-data storing section 26 is provided with a function to store correction data, which is based on the camera parameters including the external parameters, the internal parameters and the distortion parameters, in the storage means such as the RAM 9 and the data ROM 7. To put it concretely, the correction data is data obtained by computing the post-correction and pre-correction pixel coordinates making use of the camera parameters and then stored as data for correcting pixels in the storage means in a lookup-table format or the like.

As explained above, in the camera unit 1 having the described configuration, the CPU 6 executes a calibration program in order to carry out calibration processing ended with a process of finding camera parameters and storing the parameters in the storage means. In addition to the calibration processing, however, the camera unit 1 may also be provided with a function such as a function to detect a 3-dimensional object by carrying out image processing.

Next, by referring to a flowchart, the following description explains the flow of a sequence of processes carried out as the calibration processing.

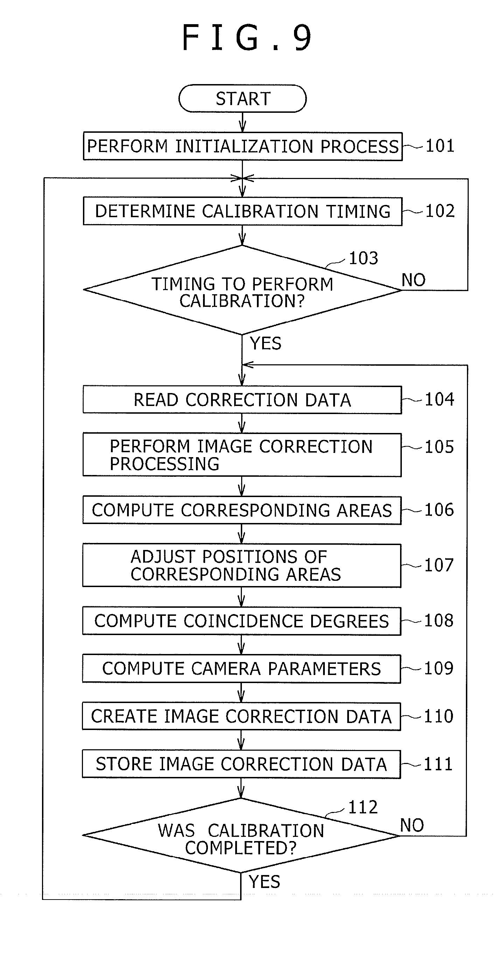

The sequence of processes shown in Fig. 9 is started when the power supply is turned on. The sequence of processes is carried out repeatedly till the power supply is turned off. As an alternative, it is possible to provide a configuration in which the calibration processing is carried out a predetermined number of times before being terminated. In addition, in the case of a camera unit 1 having the configuration shown in Fig. 4, the processing to correct an image can be carried out at a high speed by making use of an image processing LSI. Of course, the CPU can be used to carry out all the processes in order to execute the same processing.

First of all, when the power supply is turned on at a step 101, the camera unit 1 carries out, among others, processing to initialize the RAM 9 in order to execute the calibration processing. Then, the processing sequence goes on to the next step 102 in order to determine whether or not the present time is a timing to carry out the calibration processing. Then, the processing sequence goes on to the next step 103 in order to determine whether or not the determination result produced at the step 102 indicates that the present time is a timing to carry out the calibration processing. If the determination result produced at the step 103 indicates that the present time is a timing to carry out the calibration processing, the processing sequence goes on to a step 104. If the determination result produced at the step 103 indicates that the present time is not a timing to carry out the calibration processing, on the other hand, the processing sequence goes back to the step 102.

The process of determining whether or not the present time is a timing to carry out the calibration processing is carried out at a time of calibration of the camera unit 1. Typically, in order to carry out this process, an external apparatus shown in none of the figures transmits a command signal to the camera unit 1, requesting the camera unit 1 to perform the calibration processing at the maintenance of the camera unit 1. In addition, in order to calibrate the camera unit 1 mounted on a vehicle while the vehicle is moving, the camera unit 1 determines that the present time is a timing to carry out the calibration processing if it is not necessary for the CPU to execute another image processing program, if a range from a remote location to a location at a short distance is not included in the visual field or if the environment of the vehicle is an environment with few external disturbances. It is not necessary for the CPU to execute another image processing program, for example, if the vehicle is not moving or moving in the backward direction. Examples of the environment with few external disturbances are an environment with a good illumination condition, an environment with a good weather, an environment with a cloudy weather and an indoor environment. An example of the environment with a good illumination condition is a daytime environment.

Then, at the step 104, that is, if the present time is determined to be a timing to carry out the calibration processing, the correction-data reading section 21 reads a correction table or correction data from either the data ROM 7 or the program ROM 10. As described above, the correction table is a table having a lookup-table format used for storing a relation between a post-correction image and a pre-correction image. Also as described above, the correction data is data comprising the internal parameters, the external parameters and the distortion parameters. Also as described above, the data ROM 7 and the program ROM 10 are used as data storing means and program storing means respectively. It is also possible to provide an alternative configuration wherein, during the initialization process carried out at the step 101, correction data already stored in the data ROM 7 or the program ROM 10 is transferred to the RAM 9 in advance and, then, the correction-data reading section 21 reads the correction data from the RAM 9 (at the step 104). As another alternative, the CPU 6 or the like makes use of parameters computed on the basis of a variable, a constant, a random number and the like which are included in programs. In addition, the CPU 6 also makes use of a transformation table used for correcting an image found from the parameters.

Then, at the next step 105, the image correcting section 22 corrects an image by making use of the correction data. To put it concretely, by making use of the correction table having a lookup-table format, post-correction pixel luminance values and post-correction pixel color information are found or camera parameters explained earlier by referring to Eqs. (2) to (23) described before are used to make the images parallel to each other.

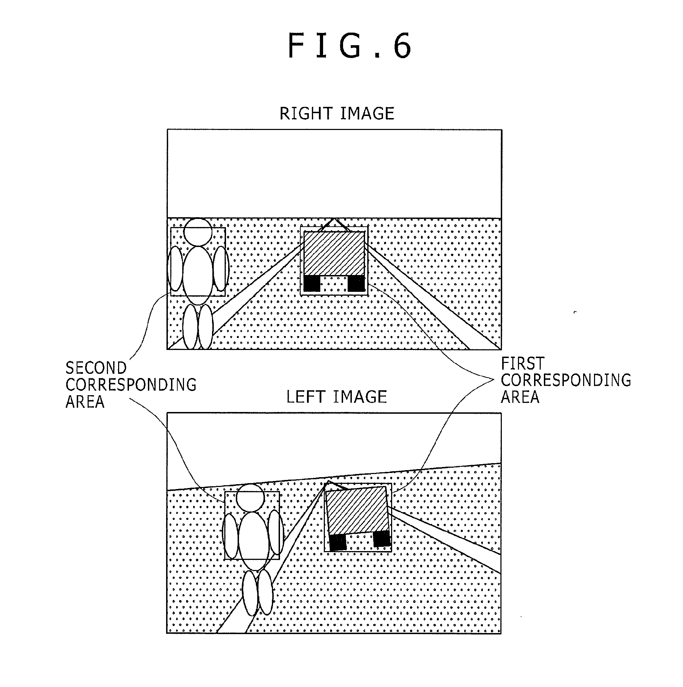

Then, at the next step 106, the corresponding-area computing section 23 finds corresponding areas on the images taken by making use of the cameras and corrected by the image correcting section 22. Fig. 6 is a diagram showing a typical result of the processing carried out by the corresponding-area computing section 23. The upper diagram in Fig. 6 shows the right image after the correction whereas the lower diagram in Fig. 6 shows the left image after the correction. In the figure, the vehicle portion is found as a first corresponding area whereas the pedestrian portion is found as a second corresponding area. In the example shown in Fig. 6, for the sake of simplicity, lens distortions and the like are not included. However, the images can each be an image in which lens distortions have been generated. The number of corresponding areas does not have to be 2. That is to say, the number of corresponding areas can be 3 or greater, or 1. In addition, in the example shown in Fig. 6, the corresponding areas are only the areas of the pedestrian and vehicle portions. However, the corresponding areas are by no means limited to the areas of the pedestrian and vehicle portions. For example, a corresponding area can be the area of a lane marker such as a white line, the area of a road surface, the area of a road-surface sign such as a speed-limit sign, the area of a building such as a house, a factory or a hospital, the area of a structure such as a power pole or a guard rail, the area of a boundary line between a floor and a wall inside a house, the area of a boundary line between a ceiling and a wall inside a house or the area of a portion of a window frame. In the following explanation, it is assumed that the epipolar lines of the corresponding areas are not parallel to each other due to reasons such as the fact that the camera parameters have not been found correctly, the fact that an aging shift has been generated with the lapse of time and/or the fact that initial values have been used because the calibration has not been carried out.

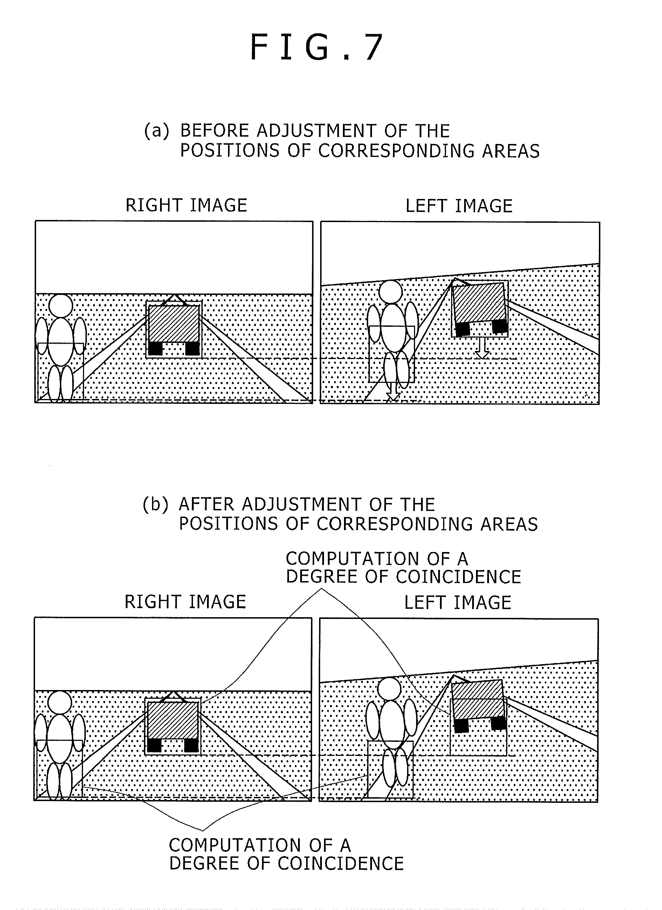

In addition, as shown in Fig. 7, the corresponding-area computing section 23 adjusts the position of a specific one of the corresponding areas so that the vertical-direction coordinate of an image portion in the specific corresponding area becomes equal to the vertical-direction coordinate of an image portion in the other one of the corresponding areas. Fig. 7 is diagrams showing a typical result of the processing carried out by the corresponding-area computing section 23 to adjust the position of the specific corresponding area on an image. To be more specific, Fig. 7(a) shows the pre-adjustment positions of the corresponding areas whereas Fig. 7(b) shows the post-adjustment positions of the corresponding areas. However, this embodiment is explained for a case in which the left and right epipolar lines are parallel to each other and the vertical-direction coordinates of the images are equal to each other. Even if the left and right epipolar lines are not parallel to each other, nevertheless, the same processing can be carried out by typically adjusting the position of the corresponding area in such a way that the corresponding area is placed on an ideal epipolar line. As an alternative, by making use of the found parameters, the images are converted into an image from the same observing point. In this case, since the image is an image from the same observing point, the adjustment is carried out so that, for example, the coordinates of the imaging areas match each other.

Areas used in the process carried out by the corresponding-area computing section 23 to find corresponding areas are the areas of a pedestrian and a vehicle which are detected by making use of typically the commonly known template coincidence technique, a support vector machine and/or a neural network, and the areas are utilized to find the corresponding areas on the images taken by the left and right cameras.

As an alternative, disparity data can be used to find an area having a number of equal disparities and the area can then be used in the computation of a corresponding area. In this case, the calibration can be carried out with a high degree of precision by selecting an area including pixels having short distances to serve as each of the areas to be used in the computation of a corresponding area. This is because, if the distance varies, the disparity also varies as well so that, in principle, the corresponding areas do not match each other. As an alternative, if a flat surface or the like is used as a corresponding area, the degree of coincidence is computed by finding the disparity of each pixel from the angle of the flat surface and the distance to the surface. In this way, even if the distance in one area varies, the present invention allows the camera parameters to be found.

This is because the magnitude of an error generated in a process of finding the degree of coincidence of the left and right images increases since the left to right disparities are different for pixels with different distances. In addition, if a plurality of corresponding areas are used, the calibration can be carried out with a higher degree of precision by selecting corresponding areas spread over the entire surface of the image instead of selecting corresponding areas concentrated only at a location on the surface of the image.

This is because, with the corresponding areas concentrated only on the right edge of the image for example, if the rectification is carried out by making use of computed camera parameters, it is quite within the bounds of possibility that an error is generated on the left side of the image even though, on the right side of the image, the epipolar lines are parallel to each other and appear on the same straight line.

Then, at the next step 108, the coincidence-degree computing section 24 computes the degree of coincidence of the left and right corresponding areas. The degree of coincidence can be found by adopting, for example, the SAD (Sum of Absolute Differences) technique, the SSD (Sum of Squared Differences) technique or the NCC (Normalized Cross Correlation) technique. In accordance with the SAD technique, the sum of absolute differences between luminance values is found. In accordance with the SSD technique, on the other hand, the sum of squared differences between luminance values is found. If an SAD or an SSD is used as the degree of coincidence, the smaller the degree of coincidence, the higher the degree of coincidence of image portions in the left and right corresponding areas. If the NCC (Normalized Cross Correlation) technique is adopted, on the other hand, the higher the degree of coincidence, the higher the degree of coincidence of image portions in the left and right corresponding areas.

This embodiment is explained by assuming that an SSD is used. The coincidence degree e making use of the SSD can be found in accordance with typically Eq. (24). In this case, however, it is assumed that the size of a corresponding area on the left image is equal to the size of its corresponding area on the right image, M pairs each consisting of left and right corresponding areas are used and $N_j$ pixels exist in a corresponding area. However, it is not necessary to make use of all the $N_j$ pixels in the computation of the coincidence degree e. That is to say, the coincidence degree e may be computed by making use of only some of the $N_j$ pixels. In addition, in the equation, notation $I_j$ denotes a luminance value obtained as a result of carrying out coordinate transformation $W_R$ making use of parameters p on the coordinates i of a pixel selected among pixels in the jth corresponding area on the right image. Notation $T_j$ denotes a luminance value obtained as a result of carrying out coordinate transformation $W_L$ making use of parameters q on the coordinates i of a pixel selected among pixels in the jth corresponding area on the left image. As described before, however, a brightness gradient quantity can also be used in addition to the luminance value. Notation $W_R$ denotes a transformation function for finding pre-rectification coordinates from post-rectification coordinates i in the rectification processing described above whereas notation $W_L$ denotes a transformation function for finding pre-rectification coordinates for coordinates obtained as a result of shifting the coordinates i by the disparity $m_j$ of the corresponding area.

[Equation 24]

[Equation 24]

$$e = \sum_{j=1}^{M}\left[\sum_{i=1}^{N_j}\left(I_j(W_R(i;p)) - T_j(W_L(i;q))\right)^2\right]$$

(Parameters p: the horizontal-direction scale factor $\alpha u^R$ of the right camera, the vertical-direction scale factor $\alpha v^R$ of the right camera,
the image center $(u_0^R, v_0^R)$ of the right camera, the distortion parameters $k_1^R$, $k_2^R$, $p_1^R$ and $p_2^R$ of the right camera,
the rotation quantity $\theta_x^R$ of a rotation made around the X axis of the right camera to make epipolar lines parallel to each other,
the rotation quantity $\theta_y^R$ of a rotation made around the Y axis and the rotation quantity $\theta_z^R$ of a rotation made around the Z axis.)
(Parameters q: the horizontal-direction scale factor $\alpha_u^L$ of the left camera, the vertical-direction scale factor $\alpha_v^L$ of the left camera,
the image center $(u_0^L, v_0^L)$ of the left camera, the distortion parameters $k_1^L$, $k_2^L$, $p_1^L$ and $p_2^L$ of the left camera,

the rotation quantity $\theta_x{}^L$ of a rotation made around the X axis of the right camera to make epipolar lines parallel to each other,

the rotation quantity $\theta_y{}^L$ of a rotation made around the Y axis and the rotation quantity $\theta_z{}^R$ of a rotation made around the Z axis and

the disparity $m_j$ between corresponding areas of the right and left cameras) ...(24)

It is to be noted that different distortion models, different rotation expressions and the like may be adopted. In addition, instead of finding the internal, external and distortion parameters, it is also possible to find elements which can be used for computing pixel positions before and after the correction. Examples of such elements are the elements of a projection transformation matrix, elements of a fundamental matrix and elements of the affine transformation. If the projection transformation matrix is used for example, in place of the internal, external and distortion parameters, the elements of the projection transformation matrix of the right image are used as the parameters p whereas the elements of the projection transformation matrix of the left image are used as the parameters q. In this case, however, if the image of a planar surface or the like is taken in the corresponding area for example, instead of finding only one disparity $m_j$ for the corresponding area, the disparity of every pixel in the corresponding area is found from, among others, the distance to the planar surface, the angle of the planar surface and the direction of the normal vector. In this case, instead of optimizing the disparity $m_j$, the distance to the planar surface, the angle of the planar surface, the direction of the normal vector and the like are optimized. If a plurality of planar surfaces parallel to each other, a plurality of parallel planar surfaces separated from each other by known distances or a plurality of planar surfaces perpendicularly intersecting each other exist for example, it is possible to provide a configuration in which the disparity $m_j$ of every corresponding area is found by making use of the fact that the planar surfaces are parallel to each other, the fact that the planar surfaces perpendicularly intersect each other and the fact that the distances separating the planar surfaces from each other are known. Even if the planar surfaces are not parallel to each other or do not perpendicularly intersect each other, the surfaces can be treated in the same way provided that the angles formed by the planar surfaces are known. In the ordinary problem of minimizing the sum of squared errors, it is necessary to find parameters which fix one side (such as T) and make the other side (such as I) match the fixed side. In the case of Eq. (24) adopted in the present invention, on the other hand, it is necessary to transform not only T, but also I, and find the parameters p and q which minimize the errors generated during the transformations of T and I. Thus, the process is different from that of the ordinary problem of minimizing the sum of squared errors.

Then, at the next step 109, the camera-parameter computing section 25 finds camera parameters which reduce the coincidence degree e found by the coincidence-degree computing section 24. In the case of the NCC or the like, the camera-parameter computing section 25 finds camera parameters which increase the coincidence degree e found by the coincidence-degree computing section 24.

The camera-parameter computing section 25 is capable of finding camera parameters minimizing the coincidence degree e by carrying out optimization processing based on a commonly known optimization algorithm such as the gradient method, the Newton method, the Gauss-Newton method or the Levenberg-Marquart method (or the corrected Gauss-Newton method). At that time, all the internal, external and distortion parameters can be optimized. As an alternative, some of the parameters can be handled as constants whereas the rest can be optimized. By providing a configuration in which the internal and distortion parameters are handled as constants whereas the external parameters are found for example, the parameters can be used in correction for a case in which the installation positions of the cameras have been shifted due to aging.

Next, the following description explains a method for inferring camera parameters minimizing the coincidence degree e expressed by Eq. (24). $I_j(W_R(i;p))$ is subjected to the Taylor expansion and terms of the second and higher orders are assumed to be small so that these terms can be ignored. By the same token, $I_j(W_L(i;q))$ is subjected to the Taylor expansion and terms of the second and higher orders are assumed to be small so that these terms can be ignored. In this way, Eq. (25) given below can be obtained.

[Equation 25]

$$e = \sum_{j=1}^{M} \sum_{i=1}^{N_j} \left[ \left( I_j(W_R(i;p)) + \nabla I \frac{\partial W_R}{\partial p} \Delta p - T_j(W_L(i;q)) - \nabla T \frac{\partial W_L}{\partial q} \Delta q \right)^2 \right] \quad \dots (25)$$

In the equation given above, notation $\nabla I$ denotes a brightness gradient at pre-correction coordinates obtained by making use of $W_R(i;p)$. By the same token, notation $\nabla T$ denotes a brightness gradient at pre-correction coordinates obtained by making use of $W_L(i;p)$. In addition, notation $\Delta p$ denotes an updated value of a parameter p whereas notation $\Delta q$ denotes an updated value of a parameter q. Then, parameters can be optimized by differentiating Eq. (25) with respect to $\Delta p$ and $\Delta q$ and setting the results of the differentiations at 0 as shown by Eq. (26) as follows.

[Equation 26]

$$\frac{\partial e}{\partial \Delta p} = 0, \quad \frac{\partial e}{\partial \Delta q} = 0 \qquad \dots (26)$$

Thus, $\Delta p$ and $\Delta q$ can be found in accordance with Eqs.(27) and (28) given as follows.
[Equation 27]

$$\Delta p = H_p \sum_{j=1}^{M} \sum_{i=1}^{N_j} \left[ \nabla I \frac{\partial W_R}{\partial p} \Delta p \right]^T \left[ T_j(W_L(i;q)) + \nabla T \frac{\partial W_L}{\partial q} \Delta q - I_j(W_R(i;p)) \right] = 0 \qquad \dots (27)$$

[Equation 28]

$$\Delta q = H_q \sum_{j=1}^{M} \sum_{i=1}^{N_j} \left[ \nabla T \frac{\partial W_L}{\partial q} \Delta q \right]^T \left[ I_j(W_R(i;p)) + \nabla I \frac{\partial W_R}{\partial p} \Delta p - T_j(W_L(i;q)) \right] = 0 \qquad \dots (28)$$

Notation $H_p$ used in Eq. (27) denotes a Hesse matrix for the case in which Eq. (26) is differentiated with respect to $\Delta p$. By the same token, notation Hq used in Eq. (28) denotes the Hesse matrix for the case in which Eq. (26) is differentiated with respect to $\Delta q$. In addition, suffix T appended to a notation indicates that the suffix and the notation represent a transposed matrix obtained as a result of transposing a matrix represented by the notation.
Parameters reducing the error can be found from Eqs. (27) and (28). To put it concretely, the parameters are updated by substituting (p+$\Delta p$) into p and substituting (q+$\Delta q$) into q.
Then, at the next step 110, by adopting the principle explained earlier by referring to Eqs. (2) to (23), relations between pre-correction and post-correction coordinate positions of pixels are computed and stored in a table having the format of a lookup table which is to be recorded as correction data. To put it concretely, for example, let post-correction coordinates be (1, 1) whereas pre-correction coordinates for the post-correction coordinates be (0.8, 0.6). In this case, both the pre-correction and post-correction coordinates are stored in the lookup table for every pixel having the post-correction coordinates or stored in the lookup table at fixed intervals.
Then, at the next step 111, the camera parameters found by the camera-parameter computing section 25 are stored in the data ROM 7, the program ROM 10 or the RAM 9. However, the camera parameters can be stored without creating the lookup table.
Finally, the coincidence degree e is compared with typically a threshold value set in the program in advance or the number of loop iterations carried out so far is compared with typically an upper limit set in the program in advance in order to determine whether or not the coincidence degree e is smaller (or greater) than the threshold value or whether or not the number of loop iterations is greater than the upper limit. If the coincidence degree e is found smaller (or greater) than the threshold value or if the number of loop iterations is found greater than the upper limit, the calibration processing is terminated. If the coincidence degree e is found greater (or smaller) than the threshold value or if the number of loop iterations is found smaller than the upper limit, on the other hand, the processing sequence goes back to the step 104.

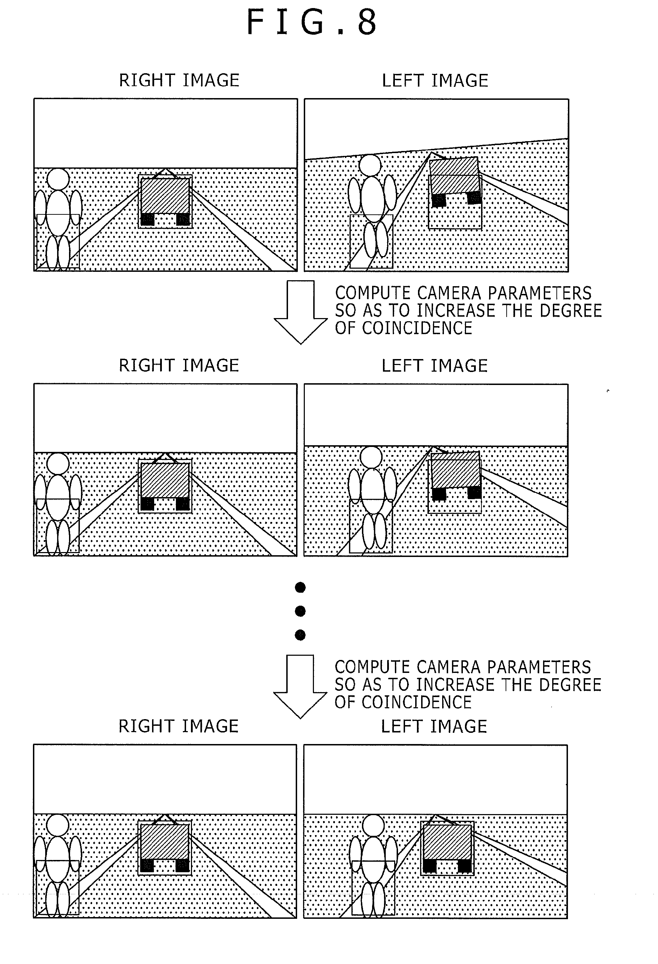

Fig. 8 is a diagram showing the above-described process. Initially, as shown in the top diagram of Fig. 8, the epipolar line on the left image is not parallel to the epipolar line on the right image because the camera parameters have not been optimized. As shown in the middle diagram of Fig. 8, however, the epipolar line on the left image is oriented in a direction almost parallel to the direction of the epipolar line on the right image because the camera parameters become closer to optimum values as a result of carrying out the calibration processing comprising the steps 104 to 111. As the calibration processing comprising the steps 104 to 111 is further carried out repeatedly, the epipolar line on the left image is eventually oriented in a direction parallel to the direction of the epipolar line on the right image as shown in the bottom diagram of Fig. 8. For the left and right images shown in the bottom diagram of Fig. 8, the degree of coincidence is closer to a minimum (or maximum) value. In the example shown in Fig. 8, errors exist only in the left camera only and, thus, only the parameters of the left camera are optimized. However, errors may exist in both the left and right cameras. In such a case, nevertheless, the optimization processing can be carried out in the same way.

If the coincidence degree e is found greater (or smaller) than the threshold value in the determination process carried out at the step 112 at the end of the calibration processing loop even after the calibration processing has been performed a predetermined number of times, an abnormality is determined to have been generated in at least one of the cameras. That is to say, the calibration processing is determined to be not executable. In such a case, a termination signal is output in order to terminate the operation of the camera serving as an imaging device. For example, a speaker outputs a warning sound serving as a warning signal to the driver or the user to terminate the operation of the camera. As an alternative, processing is carried out to show a warning message based on the warning signal on a display unit in order to terminate an incorrect operation carried out by the camera due to a shift of the position of the camera.

As described so far, a method for calibrating an imaging apparatus according to the first embodiment is adopted in order to find such camera parameters that a corresponding area on an image taken by the left camera can be adjusted to match a corresponding area on an image taken by the right camera without making use of typically a planar-surface pattern on which a known pattern has been drawn. It is needless to say, however, that a known pattern for the calibration processing can also be used. In accordance with the conventional technique, calibration processing is carried out by detecting a characteristic point. Thus, an error generated in the detection of a characteristic point causes an error to be generated also in the result of the calibration processing.

In accordance with the present invention, images are compared directly with each other. Thus, the camera parameters can be found with a high degree of precision in comparison with the conventional technique.

In addition, by adoption of the method for calibrating an imaging apparatus according to the first embodiment, calibration processing can be carried out in environments besides calibration processing performed at a shipping time at the factory. Examples of the environment include an environment in which a vehicle having the imaging apparatus mounted thereon is running on a road and an environment in which the cameras are installed in a building to serve as monitoring cameras. There is also a merit that, even if the camera external parameters or the like change due to vibrations, temperature changes, shocks and the like, the calibration processing can be carried out again. The cameras can be installed at locations other than locations inside a vehicle and a building. As a matter of fact, it is obvious that the embodiment can be applied to an imaging apparatus installed in any environment as long as, in the environment, the apparatus is used for taking images by making use of cameras having visual fields overlapping each other.

On top of that, in accordance with the method for calibrating the imaging apparatus according to the first embodiment, a plurality of corresponding areas with distances different from each other are found by the corresponding-area computing section and calibration processing is carried out. Thus, without regard to whether the distance of the taken image is short or long, it is possible to find such camera parameters with a high degree of precision that the epipolar lines are oriented in directions parallel to each other.

In addition, in the conventional method according to which a characteristic point on a planar-surface pattern is detected and calibration processing is carried out by making use of the characteristic point, there is raised a problem that an error is generated during a process of detecting the characteristic point. In the case of the present invention, however, the camera parameters are found by directly comparing images with each other without detecting a characteristic point. Thus, it is possible to find the camera parameters with a high degree of precision. On top of that, if the corresponding-area computing section 23 finds such a corresponding area that a number of image portions each having a short distance are included in the corresponding area, the image portions in the corresponding area on the left image match corresponding image portions in a corresponding area on the right image after the epipolar lines have been oriented in directions parallel to each other. Thus, it is possible to find the camera parameters with a high degree of precision. In addition, if the calibration processing is carried out by making use of not only an image taken at a certain instant, but also images taken with a plurality of timings different from each other, more corresponding areas can be used. Thus, it is possible to obtain calibration results with a high degree of precision.

The method described above is adopted for a stereo camera comprising two cameras. It is obvious, however, that the embodiment can be applied also to three or more cameras provided that the visual fields of the cameras overlap each other. In addition, the embodiment can be applied also to one camera provided that the camera is used for taking images for example with timings different from each other from positions also different from each other.

On top of that, it is possible to provide a configuration in which some or all of parameters such as the internal and distortion parameters of at least a specific one of the cameras are found in advance by adoption of another method whereas the internal, distortion and external parameters of another camera are found by adopting an image taken by the specific camera as a reference in order to find the internal, distortion and external parameters of the other camera. An example of the other method is the method described in Non-Patent Document 1.

In addition, instead of finding the internal parameters, the distortion parameters and the external parameters, it is possible to make use of other parameters that can be used for carrying out approximate transformation of image correction based on the camera parameters and other parameters that can be found by transformation from the camera parameters. Examples of such other parameters are parameters related to scales of an image, rotations of an image and parallel movements of an image. On top of that, instead of finding the internal parameters, the distortion parameters and the external parameters, it is also possible to find elements which can be used for computing pixel positions before and after the correction. Examples of such elements are the elements of a projection transformation matrix, elements of a fundamental matrix and elements of the affine transformation.

In addition, in accordance with the method described so far, the coincidence-degree computing section 24 computes the degree of coincidence by making use of luminance values of the image. In place of the luminance values, however, it is possible to make use of characteristic quantities obtained from the image. The characteristic quantities include brightness gradients, color information, color gradients and a histogram of the luminance.

On top of that, the camera unit 1 has an input section such as a display unit, a mouse, a keyboard and a touch panel so that it is possible to provide a configuration in which the user is capable of specifying the area of a person, the area of a vehicle and the like by operating the input section or a configuration in which the user is capable of making use of a hand to specify an area to be used by the corresponding-area computing section. Thus, it is possible to exclude an area including a number of pixels having distances different from each other. As a result, it is possible to exhibit a good effect such as improved precision of the calibration.

In the first embodiment, camera parameters are found so that corresponding areas match each other on images which are obtained as a result of the calibration processing carried out to make the images parallel to each other. However, it is also possible to make use of typically images which are obtained as a result of image conversion processing carried out to make the visual fields of the left and right cameras coincide with each other.

Second Embodiment

A second embodiment is explained in detail by referring to diagrams as follows.

It is to be noted that configurations included in the calibration method according to the second embodiment as configurations identical with their counterparts in the first embodiment described earlier are denoted by the same reference numerals as the counterparts in the diagrams and the identical configurations are not explained again in order to avoid duplications of descriptions.

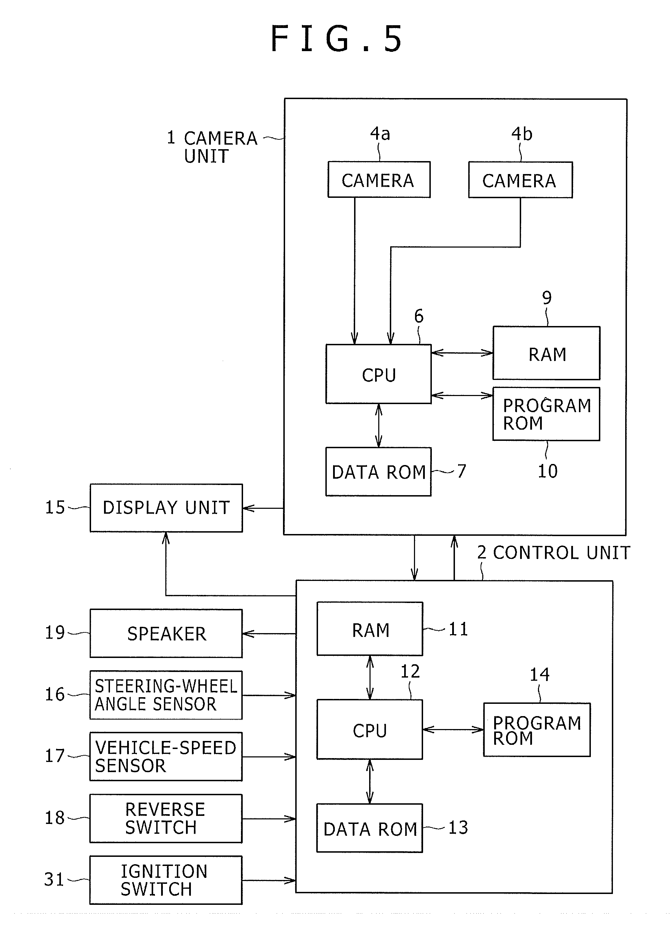

As shown in Fig. 5, the second embodiment is configured to implement a vehicle onboard system comprising a control unit 2 in addition to the camera unit 1 serving as an imaging apparatus. In the following description explaining a typical configuration, it is assumed that the cameras 4a and 4b are installed typically in a vehicle to take images of a object in front of the vehicle. However, the cameras 4a and 4b are installed not necessarily in a vehicle but they can be installed in a building or the like.

The camera unit 1 is identical with that of the first embodiment. In addition, the control unit 2 comprises a CPU 12, a RAM 11, a program ROM 14 and a data ROM 13. In the vehicle onboard system, a display unit 15 is connected to the camera unit 1 and control unit 2 to serve as a vehicle onboard unit for displaying a variety of images and various kinds of information. In addition, the vehicle onboard system is configured to include also a speaker 19 and an ignition switch 31. The speaker 19 generates a warning sound, for example, in the event of a risk that the vehicle will very likely collide with a obstacle. The speaker 19 also generates an audio guide or the like for the purpose of navigation. The ignition switch 31 is turned on when the engine of the vehicle is started. The control unit 2 controls mainly displaying operations carried out by the display unit 15 in addition to operations carried out by the entire vehicle onboard system.

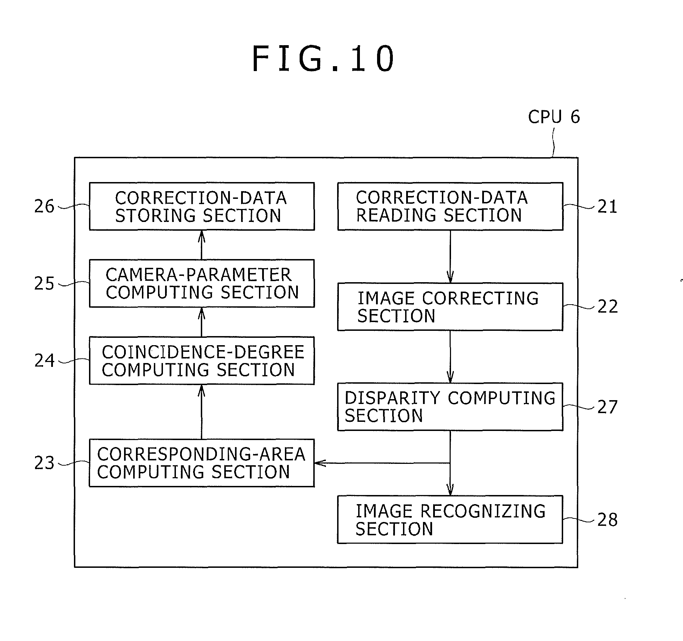

In this second embodiment, as is obvious from Fig. 10 which is a block diagram showing the CPU 6 serving as an image processing apparatus, in comparison with the first embodiment shown in Fig. 1, the CPU 6 is further provided with a disparity computing section 27 and an image recognizing section 28, which follows the disparity computing section 27, between the image correcting section 22 and the corresponding-area computing section 23.

The method for calibrating an imaging apparatus provided by the present invention is applied to a vehicle onboard system shown in Fig. 5. In accordance with the method, the cameras 4a and 4b included in the camera unit 1 serving as the imaging apparatus implement a function to recognize an environment surrounding the vehicle. The camera unit 1 may employ three or more vehicle onboard cameras. As an alternative, the camera unit 1 may also have one camera provided that the camera is used for taking images for example with timings different from each other from positions also different from each other. In addition, it is also possible to provide a configuration in which the control unit separated from the camera unit 1 employing the cameras 4a and 4b acquires images from the cameras 4a and 4b, processes the images and sets processed areas in the cameras 4a and 4b.

The camera unit 1 shown in Fig. 5 is mounted on a vehicle and employed in the vehicle onboard system shown in Fig. 5. For example, the vehicle onboard system is an apparatus in which the onboard camera unit 1 detects a obstacle existing in front of the vehicle whereas the control unit 2 controls the vehicle or notifies the driver of the risk of collision with the obstacle on the basis of a result of the detection.

An image processing program for detecting a obstacle or the like and a calibration program are stored in the program ROM 10 employed in the camera unit 1. The CPU 6 executes these programs in order to implement a function to detect a obstacle or the like and a function to calibrate the imaging apparatus.

In addition, the onboard camera unit 1 is configured to be capable of receiving information on a vehicle-speed sensor 17, a steering-wheel angle sensor 16 and a reverse switch 18 from the control unit 2. The camera unit 1 can also be configured to be capable of receiving signals representing the movement of the vehicle and the position of the vehicle from signal generators not shown in the figure. The signal generators include a yaw rate sensor, a gyro sensor, a GPS sensor and a map database.

In addition, when the engine is started, the image processing program and the calibration program are executed so that the camera unit 1 functions as the correction-data reading section 21, the image correcting section 22, the disparity computing section 27, the image recognizing section 28, the corresponding-area computing section 23, the coincidence-degree computing section 24, the camera-parameter computing section 25 and the correction-data storing section 26 which are shown in Fig. 10 serving as a block diagram illustrating the configuration of the CPU 6 serving as an image processing apparatus.

The correction-data reading section 21, the image correcting section 22, the corresponding-area computing section 23, the coincidence-degree computing section 24, the camera-parameter computing section 25 and the correction-data storing section 26 have functions identical with the functions of their respective counterparts employed in the first embodiment.

The disparity computing section 27 is a section having a function to compute disparity information serving as a difference in appearance between images which are received from the left and right cameras each serving as an imaging device and are corrected by the image correcting section 22.

The image recognizing section 28 is a section having functions such as a function to detect a obstacle or the like and an image processing function such as a function to modify the visual field of an image. The function to detect a obstacle is carried out by making use of the disparity information received from the disparity computing section 27, images received from the cameras 4a and 4b as well as at least one of the images received from the left cameras 4a and 4b and corrected by the image correcting section 22. The obstacle can be a pedestrian, an animal, another vehicle or a building structure such as a house, a factory or a hospital.

Next, by referring to a flowchart, the following description explains the flows of processing carried out in such a vehicle onboard system as the processing to calibrate the imaging apparatus and the processing to process an image.

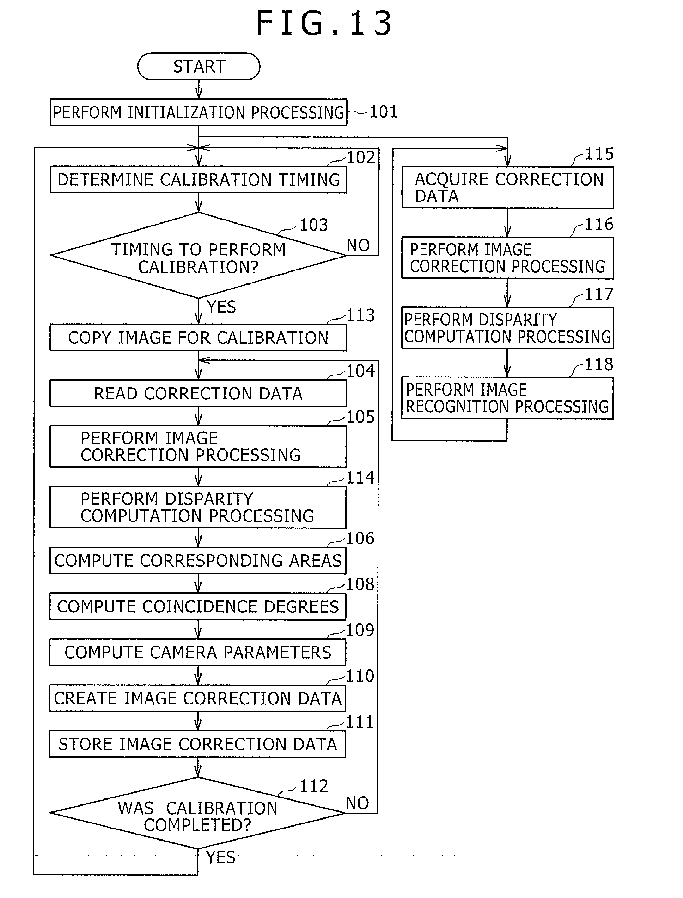

The sequence of processes shown in Fig. 13 is started when the ignition switch is turned on. The sequence of processes is carried out repeatedly till the ignition switch is turned off. A program representing the sequence of processes is executed without regard to typically whether the vehicle is running or stopped and whether an image displayed on the display unit 15 is a travelled-road guiding image output by the navigation system or another image.

The following description explains processes carried out at steps 102, 106, 108, 109, 113 and 118 by referring to the flowchart shown in Fig. 13.

A calibration-timing determination process is carried out at a step 102 on the basis of information obtained from information sources such as the steering-wheel angle sensor 16 of the vehicle onboard system 3, the vehicle-speed sensor 17 of the vehicle onboard system 3 and the reverse switch 18 of the vehicle onboard system 3 in order to determine whether or not the present time is a timing to carry out the calibration processing. If a value obtained from the steering-wheel angle sensor 16 is smaller than a value determined in advance for example, the present time is determined to be a timing to carry out the calibration processing. By carrying out the calibration processing at the present time in this case, it is possible to prevent the calibration precision from deteriorating due to an image slur generated while the vehicle is being turned.

In addition, if the vehicle speed obtained from the vehicle-speed sensor 17 is not greater (or not smaller) than a value determined in advance, the present time is determined to be a timing to carry out the calibration processing. In this case, the image processing is terminated typically when the vehicle is stopped so that the calibration processing only can be carried out.

In addition, if the present time is determined to be a timing to carry out the calibration processing when the speed of the vehicle is not smaller than the value determined in advance, the calibration processing can be carried out while the vehicle is running along a road with a good view. An example of the road with a good view is an express highway. If information obtained from the reverse switch 18 is used, the image processing is terminated when the vehicle is moving in the backward direction so that the calibration processing only can be carried out. These calibration-timing determinations are typical. That is to say, a calibration-timing determination can be carried out by making use of information obtained from any one of information sources including a yaw rate sensor, a gyro sensor, radar, a car navigation map, a map database, a speed sensor and a rain-drop sensor which are shown in none of the figures. If the yaw rate sensor or a gyro sensor is used, the timing-time determination can be carried out in the same way as the timing-time determination performed by making use of the steering-wheel angle sensor 16. If the radar is used, as a timing to carry out calibration processing, it is possible to take a situation in which a body such as another vehicle does not exist at a short distance in front of its own vehicle.

If a car navigation map or a map database is used, the timing to carry out calibration processing can be determined on the basis of whether or not the vehicle is running along a road with a good view or whether or not the sun light is propagating in the direction opposite to the running direction of the vehicle. In this case, it is possible to determine whether or not the sun light is propagating in the direction opposite to the running direction of the vehicle on the basis of the running direction and the time zone. An illumination sensor is a sensor used in execution of control to turn the head lights on and off. The illumination sensor is capable of detecting brightness of the surrounding environment, that is, capable of determining whether the present time is a day time or a night time. Thus, the present time is determined to be a timing to carry out calibration processing only when the degree of brightness is not lower than a level determined in advance. The rain-drop sensor is a sensor for carrying out automatic control of the wiper. Since the rain-drop sensor is capable of detecting a rain drop existing on the front glass, the present time is determined to be a timing to carry out calibration processing if no rain drops exist on the front glass.

Then, if the determination result produced at the step 103 indicates that the present time is a timing to carry out the calibration processing, the processing sequence goes on to a step 113. If the determination result produced at the step 103 does not indicate that the present time is a timing to carry out the calibration processing, on the other hand, the image processing apparatus repeats the process of determining whether or not the present time is a timing to carry out the calibration processing.

As described above, if the determination result produced at the step 103 indicates that the present time is a timing to carry out the calibration processing, the processing sequence goes on to the step 113 at which an image for the calibration processing is copied to storage means such as the RAM 9. By duplicating or copying the image for the calibration processing, the calibration processing can be carried out by making use of the same image and it is possible to perform the image processing concurrently. Thus, the calibration processing and the image processing are carried out by adoption of a multitasking technique. For example, the image processing is carried out repeatedly at fixed intervals whereas the calibration processing is carried out during remaining time periods in which the image processing is not performed.

In addition, processes carried out at steps 115 and 116 are identical with processes carried out at steps 104 and 105 respectively.

At each of steps 114 and 117, a process of finding a disparity which is a difference in appearance between images received from the left and right cameras is carried out. For example, in the process, a small area having a size of 8 x 8 is set on the right image. Then, an epipolar line on the left image is searched for an area corresponding to the small area or the left image is subjected to a 2-dimensional search in order to detect the area corresponding to the small area. In this way, a disparity for every small area is found. The process of computing a disparity can be carried out by adoption of a known technique. In the process carried out at the step 106 to compute a corresponding area, for example, a white line on the right side and a white line on the left side are detected as corresponding areas. As a corresponding area, it is possible to detect an edge point of a structure built from a parallel pattern. Examples of the edge point are a guard rail other than road-surface marks including a lane mark such as a white line and a curbstone.

Then, in a process carried out at a step 108 to compute the degree of coincidence, the width of a gap between corresponding areas is found and the degree of coincidence is found from the width.

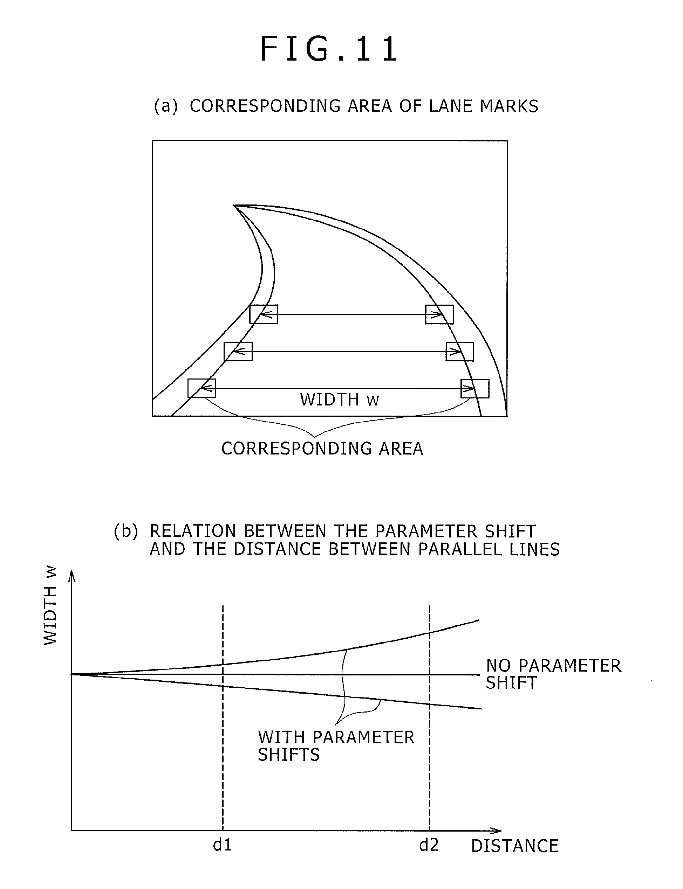

In Fig. 11, Fig. 11(a) shows detection results for lane marks serving as a corresponding area whereas Fig. 11 (b) shows relations between the width of a parallel pattern and the parameter shift.

In this embodiment, it is possible to find a parameter of rotation around the Y axis. In addition, if the width of a parallel pattern is known, it is also possible to find the distance between the cameras, the horizontal-direction scale factor serving as an internal parameter and the vertical-direction scale factor also serving as an internal parameter. This is because, if the parameters are shifted from optimum values which are parameters with no shifts, a fixed error is generated in the computed disparity without regard to the distance. For example, if the disparity for a distance d1 which is a short distance is 64, when a pixel having an error of 2 is generated, the disparity obtained as a result of a disparity computation process carried out at a step 114 is 66. If the disparity for a distance d2 which is a long distance is 4, on the other hand, when a pixel having an error of 2 is generated, the disparity obtained as a result of a disparity computation process carried out at the step 114 is 6. Thus, if the distance is computed from the disparity in accordance with Eq. (2), the distance will have such an effect that, the longer the distance, the greater the effect of the pixel having an error of 2 as shown in Fig. 11(b).

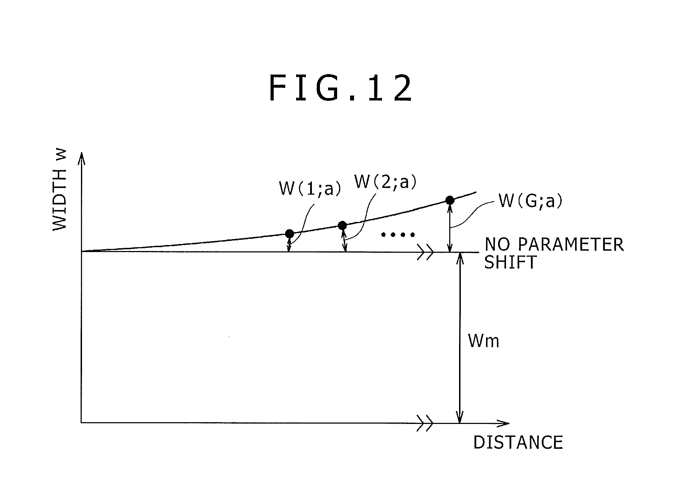

As shown in Fig. 12, let notations W(1;a), W(2;a), ... and W(G;a) denote respectively G measured values of the widths of a plurality of lane marks at different distances and let notation Wm denote the width of a lane mark for the case of no parameter shift. So, in this case for example, at a step 108, for example, the sum of differences between the measured values W and the width Wm or the sum of squared differences between the measured values W and the width Wm is found and used as the degree of coincidence. The width Wm of a lane mark for the case of no parameter shift can be acquired from typically the car navigation system or the like or defined in advance in a program. As an alternative, the width Wm of a lane mark for the case of no parameter shift is a value stored in advance in the data ROM 7.

If the width of a parallel pattern is known, it is possible to accurately find the horizontal-direction scale factor and the vertical-direction scale factor which are each used as an internal parameter. As an alternative, an average value, a maximum value, a minimum value or the like is found from the measured values of the widths of a plurality of lane marks at different distances. Then, the value found from the measured values can be used as the width of a lane mark for the case of no parameter shift. As another alternative, it is also possible to make use of a measured value of the width of a lane mark at a reference distance as an alternative width of a lane mark for the case of no parameter shift. Then, it is also possible to provide a configuration in which typically the sum of differences between the measured values and the alternative width or the sum of squared differences between the measured values and the alternative width is used as the degree of coincidence. Eq. (29) given below is a typical equation used for computing the degree of coincidence.

[Equation 29]

$$[\text{Equation } 29]$$

$$e = \sum_{j=1}^{G} \left( W(j;a) - Wm \right)^2$$

(notation W denotes a function used for finding the width of a parallel pattern from each of G corresponding areas; and notation a denotes a quantity comprising typically the rotation quantity $\theta_y^R$ around the Y axis of the right image, the rotation quantity $\theta_y^L$ around the Y axis of the left image and the parallel-movement parameter tx for the X-axis direction. As an alternative, if an error exists in the rotation quantity $\theta_y^R$ or the rotation quantity $\theta_y^L$ around the Y axis, without regard to the distance, the error appears in the computed disparity as an offset value. Thus, in place of the rotation quantity $\theta_y^R$ or the rotation quantity $\theta_y^L$ around the Y axis, a corrected value dc of the disparity is used.) ...(29)

In addition, notation Wm denotes the parallel-pattern width for the case of no parameter shift or typically an average, minimum or maximum value of the parallel-pattern widths found from corresponding areas. That is to say, the camera-parameter computation process is carried out at a step 109 to find such camera parameters that the coincidence degree explained earlier decreases (or increases depending on the barometer of the degree of coincidence). At that time, if the width of the lane mark for the case of no parameter shift is obtained, it is also possible to find the parallel-movement parameter for the X-axis direction.

For example, let a quantity a comprise the parallel-movement parameter tx for the X-axis direction and the value dc. In this case, the parallel-movement parameter tx for the X-axis direction and the value dc are found from Eq. (30) given as follows.

[Equation 30]

$$\frac{\partial e}{\partial t_x} = 0, \quad \frac{\partial e}{\partial dc} = 0 \qquad \dots (30)$$

Later on, a process is carried out at a step 112 to determine whether or not the calibration processing has been completed. If the degree of coincidence is found smaller (or greater) than the value determined in advance, the calibration processing is determined to have been completed. As an alternative, the calibration processing is forcibly finished if the calibration processing has been carried out a predetermined number of times.

If the degree of coincidence is found greater (or smaller) than the value determined in advance, an abnormality is determined to have been generated in any one of the cameras or normal execution of the calibration processing is determined to be impossible. In this case, the operations of the cameras are stopped and a signal is supplied to the control unit in order to notify the control unit that the operations of the cameras have been stopped. In this way, the system can be halted. In addition, it is possible to carry out processing in order to output a sound serving as a warning from the speaker to the driver and display a warning message on the display unit.

A process is carried out at a step 118 in order to process at least one of the following: disparity data found by performing a disparity computation process at a step 117, image data received from the left and right cameras and image data obtained by performing an image-data correction process carried out at a step 116 to correct the image data received from the left and right cameras. In this way, it is possible to detect, among others, a obstacle and a lane mark by adoption of the commonly known technologies.

As described above, in this embodiment, an edge point of a parallel pattern is detected as a corresponding area and, by making use of information on the width of the corresponding area, camera parameters can be found. By making use of the width of the parallel pattern, the calibration processing can be carried out even if only a portion of the parallel pattern is included in the visual field. The calibration processing can be carried out as long as the patterns are parallel. That is to say, the embodiment has a merit that there is no condition absolutely requiring a straight line.

A number of parallel patterns exist not only a road, but also in a room or the like. Thus, this embodiment can be applied also to, among others, a monitoring system used in a room or the like. In the case of a monitoring system used inside a room, it is possible to make use of a parallel pattern existing inside the room. Examples of such a parallel line are a boundary line between a floor and a wall surface inside the room, a boundary line between a ceiling and a wall surface inside the room or a window frame. That is to say, as a corresponding area, it is possible to compute an area including at least one of the boundary line between a floor and a wall surface, the boundary line between a ceiling and a wall surface and the window frame.

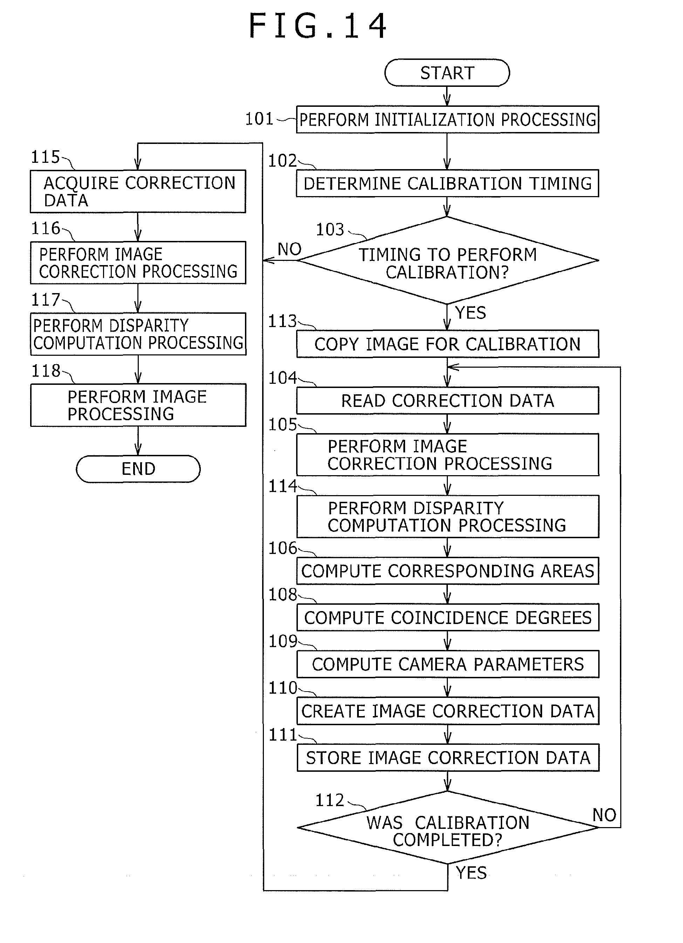

In addition, if the calibration is carried out in accordance with a processing procedure represented by the flowchart shown in Fig. 14, the highest priority can be assigned to the execution of the calibration processing at; typically, an activation time at which calibration is required. In a calibration-timing determination process carried out at the step 102 for example, the present time is determined to be a calibration timing typically when the system is activated, when the temperature changes much or when a time period determined in advance has lapsed since the execution of the most recent calibration. Then, if the present time is determined to be a calibration timing, the calibration processing is carried out till the calibration is completed. After the calibration has been completed, image processing is carried out.

By repeating the processing shown in Fig. 14, at a timing which requires that the calibration be carried out, the highest priority can be assigned to the calibration processing. While the calibration processing is being carried out, a warning message is displayed on the display unit or, typically, a sound serving as an audio warning is generated in order to indicate that the image processing has been halted. In addition, in this embodiment, besides the application in which the vehicle is running, it is obvious that, typically, a parallel pattern on a camera manufacturing line can be used.

Third Embodiment

A third embodiment is explained in detail by referring to diagrams as follows.

It is to be noted that configurations included in the calibration method according to the third embodiment as configurations identical with their counterparts in the first and second embodiments described earlier are denoted by the same reference numerals as the counterparts in the diagrams and the identical configurations are not explained again in order to avoid duplications of descriptions.

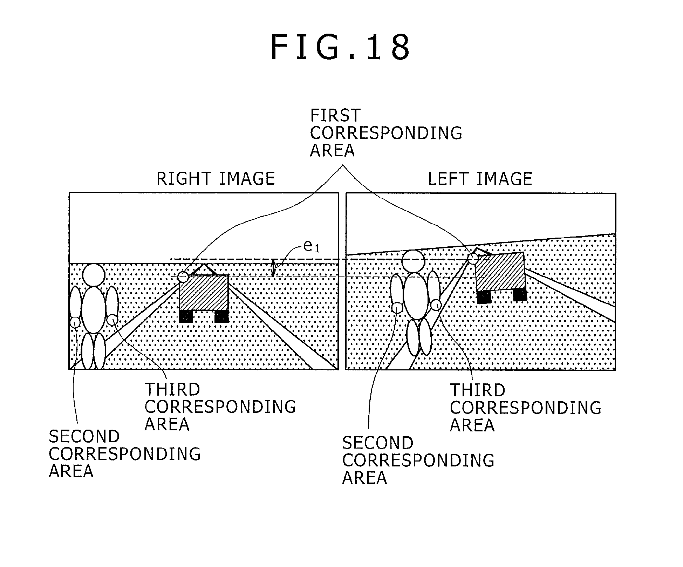

In the third embodiment, the corresponding-area computing section 23 detects a body angle and the like as characteristic points from the right image as shown in Fig. 18 and detects these characteristic points, which have been detected from the right image, from the left image. Then, the corresponding-area computing section 23 associates each of the characteristic points detected from the right image with one of the characteristic points detected from the left image. In the example shown in Fig. 18, the left upper angle of a vehicle is found as the third corresponding area whereas the ends of the hands of a pedestrian are found as the second and third corresponding areas. However, the number of corresponding areas does not have to be 3.

Then, the coincidence-degree computing section typically computes the degree of coincidence of each right corresponding area and the left corresponding area associated with the right corresponding area on the basis of differences in vertical-direction coordinates between image portions included in the corresponding areas. If the number of pairs each consisting of right and left corresponding areas found by the corresponding-area computing section 23 is G, the coincidence-degree computing section typically computes the degree of coincidence in accordance with an evaluation function expressed by Eq. (31) making use of differences in vertical-direction coordinates between image portions included in the corresponding areas in the G pairs. In Fig. 18, for example, notation $e_1$ denotes a difference in vertical-direction coordinates between the first corresponding areas on the right and left images. However, the positions at which the cameras are installed are used as a basis for determining whether or not the differences in vertical-direction coordinates are to be used in the evaluation function.

[Equation 31]

$$e = \sum_{j=1}^{G} \left( v^R\left(j;p'\right) - v^L\left(j;q'\right) \right)^2$$

$$\dots \quad (31)$$

In the equation given above, notation $v^R(j;p')$ denotes the vertical-direction coordinate of the jth corresponding area on an image generated by the image correcting section as a result of correcting the right image by making use of camera parameters p'. On the other hand, notation $v^L(j;q')$ denotes the vertical-direction coordinate of the jth corresponding area on an image generated by the image correcting section as a result of correcting the left image by making use of camera parameters q'. Much like the first embodiment, notations p' and q' denote the internal, external and distortion parameters of the left and right cameras. The parameters p' and q' are optimized in order to minimize the coincidence degree expressed by Eq. (31) by adoption of a known optimization method such as the Newton method, the Gauss-Newton method or the corrected Gauss-Newton method.

If the first, second and third embodiments described above are combined, it is possible to precisely find camera parameters, parameters obtained by transforming the camera parameters and parameters approximating the camera parameters. In addition, it is possible not only to obtain 3-dimensional data used as disparity data with little mismatching, but also to carry out 3-dimensional measurements with few errors.

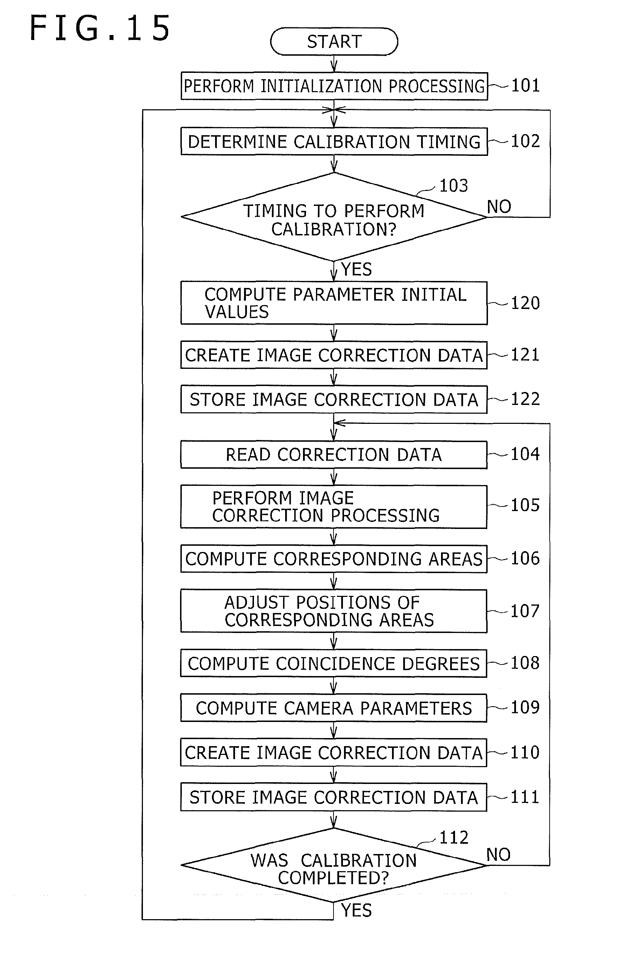

In addition, by providing a step 120 to serve as a step of computing initial values of the camera parameters as shown in Fig. 15, the calibration can be carried out even if the camera parameters are much shifted from their optimum values or even if the design values are not known. The initial values of the camera parameters can be found by adoption of typically a known technique making use of a pattern provided for the calibration. As an alternative, a plurality of characteristic points are extracted from an image and points each corresponding to one of the extracted characteristic points are extracted from the other image in order to obtain a plurality of characteristic-point pairs which can be used to find external characteristics and the like. Then, by creating image correction data by making use of the initial values at a step 121 and by storing the correction data in storage means at a step 122, the optimum values of the camera parameters can be found from the initial values found at the step 120.

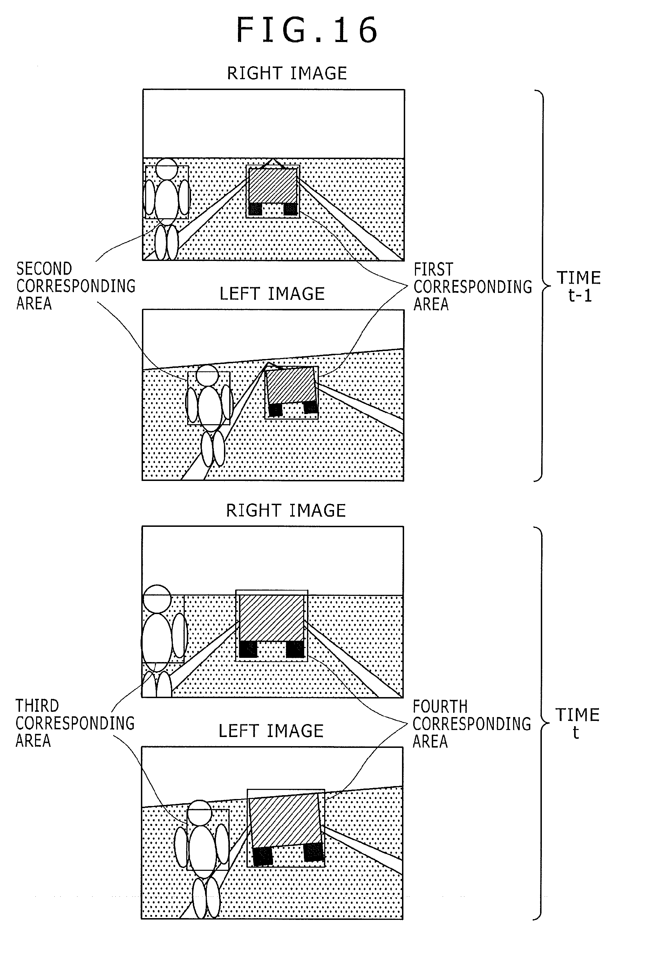

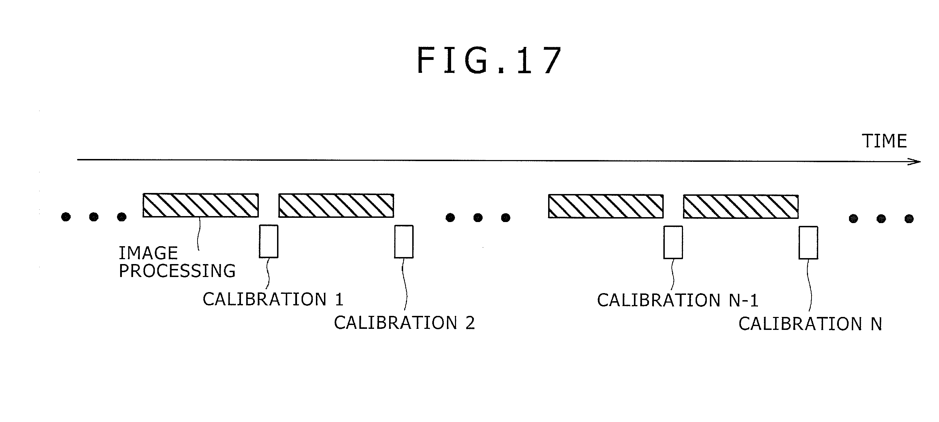

In addition, as shown in Fig. 16, images taken with timings different from each other are used in order to allow calibration to be carried out by making use of a larger number of corresponding areas and allow the precision of the calibration to be improved. For example, an image taken at a time (t-1) is used in addition to an image taken at a time t. In addition, by making use of areas detected by image processing at the time (t-1) as areas of a pedestrian, a vehicle and the like, areas may be found as areas to be used in computing corresponding areas of the time t by adoption of a commonly known technique such as the template coincidence technique. On top of that, in execution of the image processing and the calibration processing, as shown in Fig. 17, the calibration processing is divided into N calibrations carried out N times respectively. Each of these N calibrations is carried out after image processing during a remaining time period of a processing time period allocated to the image processing and the calibration following the image processing. In this way, it is possible to prevent the allocated processing time period from being unused.

Description of Reference Numerals

1: Camera unit
4a and 4b: Camera
6: CPU
7: Data ROM
9: RAM
10: Program ROM
21: Correction-data reading section
22: Image correcting section
23: Corresponding-area computing section
24: Coincidence-degree computing section
25: Camera-parameter computing section
26: Correction-data storing section

**Claims**

1. An image processing apparatus comprising:

   a correction-data reading section for reading pre-stored correction data to be used for correcting two images taken in such a way that their visual fields overlap each other and at least one of their positions, their angles and their zoom ratios are different from each other or for reading correction data computed by carrying out processing;
   an image correcting section for correcting a taken image by making use of said correction data read by said correction-data reading section;
   a corresponding-area computing section for computing corresponding areas selected from the inside of each of two images corrected by said image correcting section;

a coincidence-degree computing section for computing at least one of a degree of coincidence of image patterns extracted from said corresponding areas, a degree of coincidence of coordinates of said corresponding areas and a degree of coincidence of gaps between said corresponding areas;

a camera-parameter computing section for computing camera parameters on the basis of a coincidence degree computed by said coincidence-degree computing section; and

a correction-data storing section for storing said camera parameters computed by said camera-parameter computing section or correction data based on said camera parameters.

2. The image processing apparatus according to claim 1, wherein:

said camera parameters computed by said camera-parameter computing section are internal parameters, external parameters or distortion parameters;

said internal parameters including at least one of the focal length of an imaging device, the vertical-direction size of a pixel, the horizontal-direction size of a pixel, a vertical-direction scale factor, a horizontal-direction scale factor, an angle formed by the vertical and horizontal axes of said imaging device and the coordinates of an optical-axis center;

said external parameters including at least one of the rotation angle of said imaging device and the parallel translation of said imaging device; and

said distortion parameters being parameters used for correcting distortions of an image.

3. The image processing apparatus according to claim 1, wherein said camera-parameter computing section computes a set of edge points of a parallel pattern selected from the inside of each of two taken images as a corresponding area.

4. The image processing apparatus according to claim 3, wherein:

when computing a degree of coincidence of gaps of said corresponding areas, said coincidence-degree computing section computes said degree of coincidence by comparing at least one of computed values, pre-stored or pre-defined widths of parallel patterns and widths received from an external apparatus as the widths of parallel patterns; and

said computed values are each a value computed from at least one of the average of gaps between said corresponding areas, the minimum value among said gaps between said corresponding areas and the maximum value among said gaps between said corresponding areas.

5. The image processing apparatus according to claim 1, wherein:

said coincidence-degree computing section computes a degree of coincidence of said corresponding areas on the basis of characteristic quantities obtained from an image; and

said characteristic quantities are at least one of luminance values inside said corresponding area, brightness gradients, luminance-change directions, color information, color gradients, color gradient directions, a histogram of the luminance, a histogram of the brightness gradient, a histogram of the color gradient, a histogram of the brightness gradient direction and a histogram of the color gradient directions.

6. The image processing apparatus according to claim 1, wherein said correction data is camera parameters stored in advance or a transformation table showing pre-correction and post-correction relations computed on the basis of said camera parameters.

7. The image processing apparatus according to claim 6, further comprising a correction-data storing section for storing said camera parameters computed by said camera-parameter computing section or said transformation table as correction data.

8. The image processing apparatus according to claim 1, wherein said image correcting section makes use of camera parameters of a specific one of two imaging devices as correction data in order to correct an image taken by the other one of said two imaging devices.

9. The image processing apparatus according to claim 3, wherein:

said corresponding-area computing section computes an area including a pattern, which is detected from a taken image, as said corresponding area,
said pattern being the pattern of at least one of a pedestrian, a vehicle, a road surface, a road-surface sign, a construction and a structure.

10. The image processing apparatus according to claim 3, wherein:

said corresponding-area computing section computes an area including a pattern, which is detected from a taken image, as said corresponding area,
said pattern being the pattern of at least one of a boundary line between a floor and a wall surface inside a house, a boundary line between a ceiling and a wall surface inside a house or a window frame inside a house.

11. The image processing apparatus according to claim 1, wherein:

a coincidence degree computed by said coincidence-degree computing section as said degree of coincidence is used as a basis for carrying out determination as to whether or not an abnormality has been generated in an imaging device or whether or not said acquired correction data is correct; and
on the basis of a result of said determination, a termination signal for stopping the operation of said imaging device is output or a warning signal used for issuing a warning to the user is output.

12. The image processing apparatus according to claim 1, wherein said corresponding-area computing section computes a plurality of corresponding areas on one taken image.

13. The image processing apparatus according to claim 12, wherein said corresponding areas have different distances from an imaging device:

14. The image processing apparatus according to claim 1, wherein images taken by an imaging device are images taken with timings different from each other.

15. The image processing apparatus according to claim 1, comprising means for copying an image taken by an imaging device.

16. The image processing apparatus according to claim 1, comprising:

a disparity computing section for computing disparity information from two images corrected by said image correcting section; and
an image recognizing section for detecting a body of at least one of a pedestrian, a vehicle, a construction and a structure, a road surface and a road-surface sign on the basis of said disparity information.

17. The image processing apparatus according to claim 16, wherein said corresponding-area computing section computes an area, which includes said body detected by said image recognizing section, as said corresponding area.

18. An imaging apparatus having:

two imaging devices for taking images; and
processing means for carrying out image processing on images taken by said imaging devices,
wherein said processing means comprises:

a correction-data reading section for reading pre-stored correction data used for correcting two images taken by said two imaging devices;
an image correcting section for correcting a taken image by making use of said correction data read by said correction-data reading section;
a corresponding-area computing section for computing corresponding areas selected from the inside of each of two images corrected by said image correcting section;
a coincidence-degree computing section for computing at least one of a degree of coincidence of image patterns extracted from said corresponding areas, a degree of coincidence of coordinates of said corresponding areas and a degree of coincidence of gaps between said corresponding areas; and
a camera-parameter computing section for computing camera parameters on the basis of a coincidence degree computed by said coincidence-degree computing section.

**19.** The imaging apparatus according to claim 18, comprising storage means for storing said correction data.

**20.** The imaging apparatus according to claim 18, comprising program storing means for storing a calibration program to be executed for calibrating said imaging devices,
wherein said processing means carries out functions of said correction-data reading section, said image correcting section, said corresponding-area computing section, said coincidence-degree computing section and said camera-parameter computing section on the basis of said calibration program, which has been stored in said program storing means, when a signal for turning on a power supply is received.

# FIG.1

CPU 6

26 — CORRECTION-DATA
STORING SECTION

CORRECTION-DATA
READING SECTION — 21

25 — CAMERA-PARAMETER
COMPUTING SECTION

IMAGE CORRECTING
SECTION — 22

24 — COINCIDENCE-DEGREE
COMPUTING SECTION

CORRESPONDING-AREA
COMPUTING SECTION — 23

# FIG.2

# FIG.3

3-DIMENSIONAL POINT

PLANAR SURFACE OF
POST-RECTIFICATION
LEFT IMAGE

PLANAR SURFACE OF
POST-RECTIFICATION
RIGHT IMAGE

AFTER
RECTIFICATION

BEFORE
RECTIFICATION

$C_L$

$C_R$

POST-RECTIFICATION
EPIPOLAR LINE

PRE-RECTIFICATION
EPIPOLAR LINE

# FIG.4

1 CAMERA UNIT

# FIG.5

1 CAMERA UNIT

4a CAMERA
4b CAMERA

6 CPU

9 RAM

10 PROGRAM ROM

7 DATA ROM

15 DISPLAY UNIT

2 CONTROL UNIT

19 SPEAKER

11 RAM

12 CPU

14 PROGRAM ROM

13 DATA ROM

16 STEERING-WHEEL ANGLE SENSOR

17 VEHICLE-SPEED SENSOR

18 REVERSE SWITCH

31 IGNITION SWITCH

# F I G . 6

RIGHT IMAGE

SECOND
CORRESPONDING
AREA

FIRST
CORRESPONDING
AREA

LEFT IMAGE

# FIG.7

(a) BEFORE ADJUSTMENT OF THE
POSITIONS OF CORRESPONDING AREAS

RIGHT IMAGE                    LEFT IMAGE

(b) AFTER ADJUSTMENT OF THE
POSITIONS OF CORRESPONDING AREAS

COMPUTATION OF A
DEGREE OF COINCIDENCE

RIGHT IMAGE                    LEFT IMAGE

COMPUTATION OF A
DEGREE OF COINCIDENCE

# FIG.8

RIGHT IMAGE          LEFT IMAGE

COMPUTE CAMERA PARAMETERS
SO AS TO INCREASE THE DEGREE
OF COINCIDENCE

RIGHT IMAGE          LEFT IMAGE

COMPUTE CAMERA PARAMETERS
SO AS TO INCREASE THE DEGREE
OF COINCIDENCE

RIGHT IMAGE          LEFT IMAGE

EP 2 624 575 A1

# F I G . 9

```
                    ( START )
                        │
   ┌──────────────────────────────────────┐
   │ PERFORM INITIALIZATION PROCESS │──101
   └──────────────────────────────────────┘
                        │
        ┌───────────────┼──────────────────────────┐
        │               ▼                          │
        │  ┌──────────────────────────────┐        │
        │  │ DETERMINE CALIBRATION TIMING │──102   │
        │  └──────────────────────────────┘        │
        │               │                          │
        │               ▼           ╱103           │
        │        TIMING TO PERFORM         NO       │
        │          CALIBRATION?  ──────────────────┤
        │               │                          │
        │              YES                         │
        │               ▼                          │
        │  ┌──────────────────────────────┐        │
        │  │     READ CORRECTION DATA     │──104   │
        │  └──────────────────────────────┘        │
        │               │                          │
        │  ┌──────────────────────────────┐        │
        │  │  PERFORM IMAGE CORRECTION    │──105   │
        │  │        PROCESSING            │        │
        │  └──────────────────────────────┘        │
        │               │                          │
        │  ┌──────────────────────────────┐        │
        │  │ COMPUTE CORRESPONDING AREAS  │──106   │
        │  └──────────────────────────────┘        │
        │               │                          │
        │  ┌──────────────────────────────┐        │
        │  │     ADJUST POSITIONS OF      │──107   │
        │  │    CORRESPONDING AREAS       │        │
        │  └──────────────────────────────┘        │
        │               │                          │
        │  ┌──────────────────────────────┐        │
        │  │ COMPUTE COINCIDENCE DEGREES  │──108   │
        │  └──────────────────────────────┘        │
        │               │                          │
        │  ┌──────────────────────────────┐        │
        │  │  COMPUTE CAMERA PARAMETERS   │──109   │
        │  └──────────────────────────────┘        │
        │               │                          │
        │  ┌──────────────────────────────┐        │
        │  │ CREATE IMAGE CORRECTION DATA │──110   │
        │  └──────────────────────────────┘        │
        │               │                          │
        │  ┌──────────────────────────────┐        │
        │  │ STORE IMAGE CORRECTION DATA  │──111   │
        │  └──────────────────────────────┘        │
        │               │          ╱112            │
        │         WAS CALIBRATION          NO       │
        │          COMPLETED?  ─────────────────────┘
        │               │
        │              YES
        └───────────────┘
```

35

# FIG.10

CPU 6

26 — CORRECTION-DATA STORING SECTION

CORRECTION-DATA READING SECTION — 21

25 — CAMERA-PARAMETER COMPUTING SECTION

IMAGE CORRECTING SECTION — 22

24 — COINCIDENCE-DEGREE COMPUTING SECTION

DISPARITY COMPUTING SECTION — 27

23 — CORRESPONDING-AREA COMPUTING SECTION

IMAGE RECOGNIZING SECTION — 28

# FIG.11

(a) CORRESPONDING AREA OF LANE MARKS

WIDTH w

CORRESPONDING AREA

(b) RELATION BETWEEN THE PARAMETER SHIFT
   AND THE DISTANCE BETWEEN PARALLEL LINES

WIDTH w

NO PARAMETER
SHIFT

WITH PARAMETER
SHIFTS

d1    d2    DISTANCE

# FIG.12

# FIG.13

START

PERFORM INITIALIZATION PROCESSING ~101

DETERMINE CALIBRATION TIMING /102

TIMING TO PERFORM CALIBRATION? /103 —NO

YES

COPY IMAGE FOR CALIBRATION /113

READ CORRECTION DATA /104

PERFORM IMAGE CORRECTION PROCESSING /105

PERFORM DISPARITY COMPUTATION PROCESSING /114

COMPUTE CORRESPONDING AREAS /106

COMPUTE COINCIDENCE DEGREES /108

COMPUTE CAMERA PARAMETERS /109

CREATE IMAGE CORRECTION DATA /110

STORE IMAGE CORRECTION DATA /111

WAS CALIBRATION COMPLETED? /112 —NO

YES

ACQUIRE CORRECTION DATA /115

PERFORM IMAGE CORRECTION PROCESSING /116

PERFORM DISPARITY COMPUTATION PROCESSING /117

PERFORM IMAGE RECOGNITION PROCESSING /118

# FIG.14

START

101 — PERFORM INITIALIZATION PROCESSING

115
ACQUIRE CORRECTION DATA

102
DETERMINE CALIBRATION TIMING

116
PERFORM IMAGE CORRECTION PROCESSING

103
TIMING TO PERFORM CALIBRATION?

NO

117
PERFORM DISPARITY COMPUTATION PROCESSING

YES

113
COPY IMAGE FOR CALIBRATION

118
PERFORM IMAGE PROCESSING

104
READ CORRECTION DATA

105
PERFORM IMAGE CORRECTION PROCESSING

END

114
PERFORM DISPARITY COMPUTATION PROCESSING

106
COMPUTE CORRESPONDING AREAS

108
COMPUTE COINCIDENCE DEGREES

109
COMPUTE CAMERA PARAMETERS

110
CREATE IMAGE CORRECTION DATA

111
STORE IMAGE CORRECTION DATA

112
WAS CALIBRATION COMPLETED?

NO

YES

# FIG.15

```
        ( START )
            ↓
PERFORM INITIALIZATION PROCESSING ─── 101
            ↓
DETERMINE CALIBRATION TIMING ─── 102
            ↓
      ╱ 103 ╲
     ╱ TIMING TO PERFORM ╲ ── NO
     ╲  CALIBRATION?  ╱
      ╲_____╱
          ↓ YES
COMPUTE PARAMETER INITIAL
VALUES ─── 120
            ↓
CREATE IMAGE CORRECTION DATA ─── 121
            ↓
STORE IMAGE CORRECTION DATA ─── 122
            ↓
READ CORRECTION DATA ─── 104
            ↓
PERFORM IMAGE
CORRECTION PROCESSING ─── 105
            ↓
COMPUTE CORRESPONDING AREAS ─── 106
            ↓
ADJUST POSITIONS OF
CORRESPONDING AREAS ─── 107
            ↓
COMPUTE COINCIDENCE DEGREES ─── 108
            ↓
COMPUTE CAMERA PARAMETERS ─── 109
            ↓
CREATE IMAGE CORRECTION DATA ─── 110
            ↓
STORE IMAGE CORRECTION DATA ─── 111
            ↓
      ╱ 112 ╲
     ╱ WAS CALIBRATION ╲ ── NO
     ╲  COMPLETED?  ╱
      ╲_____╱
          ↓ YES
```

# FIG.16

RIGHT IMAGE

LEFT IMAGE

SECOND
CORRESPONDING
AREA

FIRST
CORRESPONDING
AREA

TIME
t-1

RIGHT IMAGE

LEFT IMAGE

THIRD
CORRESPONDING
AREA

FOURTH
CORRESPONDING
AREA

TIME
t

# FIG.17

TIME

IMAGE PROCESSING

CALIBRATION 1

CALIBRATION 2

CALIBRATION N-1

CALIBRATION N

EP 2 624 575 A1

# FIG.18

FIRST
CORRESPONDING
AREA

RIGHT IMAGE                    LEFT IMAGE

$e_1$

THIRD
CORRESPONDING
AREA

THIRD
CORRESPONDING
AREA

SECOND
CORRESPONDING
AREA

SECOND
CORRESPONDING
AREA

EP 2 624 575 A1

<table>
<tr><td colspan="3">INTERNATIONAL SEARCH REPORT</td><td>International application No.<br>PCT/JP2011/067118</td></tr>
</table>

A. CLASSIFICATION OF SUBJECT MATTER
*H04N17/00*(2006.01)i, *G01B11/00*(2006.01)i, *G03B35/08*(2006.01)i, *H04N5/232*
(2006.01)i, *H04N13/02*(2006.01)i

According to International Patent Classification (IPC) or to both national classification and IPC

B. FIELDS SEARCHED

Minimum documentation searched (classification system followed by classification symbols)
H04N17/00, G01B11/00, G03B35/08, H04N5/232, H04N13/02

Documentation searched other than minimum documentation to the extent that such documents are included in the fields searched
Jitsuyo Shinan Koho        1922–1996   Jitsuyo Shinan Toroku Koho    1996–2011
Kokai Jitsuyo Shinan Koho   1971–2011   Toroku Jitsuyo Shinan Koho    1994–2011

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2004-354257 A  (Olympus Corp.),<br>16 December 2004 (16.12.2004),<br>paragraphs [0060] to [0218]; fig. 1 to 20<br>& US 2005/0237385 A1    & EP 1637836 A1<br>& WO 2004/106856 A1 | 1-9,11-20<br>10 |
| Y | JP 2010-181209 A  (Toyota Motor Corp.),<br>19 August 2010 (19.08.2010),<br>paragraphs [0024] to [0031]<br>(Family: none) | 10 |
| A | JP 2002-27507 A  (Sony Corp.),<br>25 January 2002 (25.01.2002),<br>entire text; all drawings<br>& US 202/0113878 A1 | 1-20 |

☐ Further documents are listed in the continuation of Box C.   ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

Date of the actual completion of the international search
06 October, 2011 (06.10.11)

Date of mailing of the international search report
18 October, 2011 (18.10.11)

Name and mailing address of the ISA/
Japanese Patent Office

Authorized officer

Facsimile No.

Telephone No.

Form PCT/ISA/210 (second sheet) (July 2009)

45

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 10341458 A

**Non-patent literature cited in the description**

- **Z. ZHANG et al.** A Flexible New Technique for Camera Calibration. *IEEE Transactions on Pattern Analysis and Machine Intelligence,* November 2000, vol. 22 (11), 1330-1334